# EUROPÄISCHE PATENTSCHRIFT

(11) **EP 3 557 945 B1**
(45) Veröffentlichungstag und Bekanntmachung des Hinweises auf die Patenterteilung: **01.07.2020**
(21) Anmeldenummer: 19176562.7
(22) Anmeldetag: 21.12.2016
(51) Int. Cl.: H05B 6/06, B23B 31/117, B23P 11/02, B23Q 3/12, H05B 6/10, H05B 6/14, H05B 6/38, H05B 6/40

(54) **SCHRUMPFGERÄT MIT HEIZKONTROLLE**
SHRINKING APPARATUS WITH HEATING CONTROL
APPAREIL DE RÉTRACTION À CONTRÔLE DE LA CHALEUR

(30) Priorität: 28.12.2015 DE 102015016831
(43) Veröffentlichungstag der Anmeldung: 23.10.2019
(62) Teilanmeldung aus: 16822678.5
(73) Patentinhaber: Haimer GmbH, 86568 Igenhausen (DE)
(72) Erfinder: Podhräzky, Antonin, 67531 Jerrmice (CZ)
(74) Vertreter: Misselhorn, Hein-Martin

(56) Entgegenhaltungen:
- EP-A2- 0 658 068
- WO-A2-2013/167686
- DE-A1- 10 102 710
- DE-A1-102005 042 615

## Beschreibung

### Grundsätzlicher Gegenstand der Erfindung

Die Erfindung betrifft eine Schrumpfvorrichtung nach dem Oberbegriff des Anspruchs 1.

### Stand der Technik

Schrumpfvorrichtungen zum Ein- und Ausschrumpfen von Werkzeugschäften in Werkzeughalter sind seit geraumer Zeit bekannt. Ursprünglich wurden solche Schrumpfvorrichtungen mit einem Gasbrenner oder Heißluft betrieben, mittels derer die Hülsenpartie des Werkzeughalters heiß gemacht wurde, um sie so weit auf zu weiten, dass sie einen Werkzeugschaft im Presssitz aufnehmen kann oder diesen freigibt. In jüngerer Zeit haben Schrumpfvorrichtungen eine große Verbreitung gefunden, bei denen der jeweilige Werkzeughalter mithilfe einer Induktionsspule beheizt wird. Dies hat den Schrumpfprozess wesentlich beschleunigt, effizienter und leichter handhabbar gemacht und daher zu seiner weiten Verbreitung beigetragen.

Die erste für den praktischen Einsatz brauchbare Schrumpfvorrichtung wird in der Patentliteratur durch die deutsche Patentanmeldung DE 199 15 412 beschrieben.

Die bisher bekannten Schrumpfvorrichtungen sind noch nicht optimal automatisiert. Es können Fehler passieren, etwa ein zu langes induktives Beheizen der Hülsenpartie eines Werkzeughalters. Dies kann zur Folge haben, dass die Hülsenpartie des Werkzeughalters überhitzt wird. Die Hülsenpartie wird dann sozusagen ungewollt angelassen. Dies kann zu einer nachteiligen Gefügeveränderung führen. Die Hülsenpartie und damit der gesamte Werkzeughalter werden unter Umständen Ausschuss. Sofern die Hülsenpartie nicht sofort zum Ausschuss wird, besteht jedenfalls die Gefahr, dass sie rissig wird, wenn sie mehrfach überhitzt worden ist.

Man hat bereits versucht, hier Abhilfe zu schaffen, indem man die Temperatur der Hülsenpartie mit einem Infrarot-Detektor misst oder mit einem die Oberfläche der Hülsenpartie berührenden Taster. Beide Messarten sind aber fehlerbehaftet. Die Messung mit einem Infrarot-Detektor hängt stark davon ab, welche Farbe und Beschaffenheit die Hülsenpartie aufweist. Insbesondere nach längerem Gebrauch können die Hülsenpartien durchaus gewisse Anlassfarben zeigen, die die Temperaturmessung verfälschen. Schmutz und eventuelle Rückstände von Kühlschmiermittel tun ein Übriges.

Auch die berührenden Taster haben ihre Probleme. Denn hier hängt der Genauigkeit der Temperaturmessung unter anderem von der Kontaktintensität ab und ebenfalls davon, wie sauber die Oberfläche der Hülsenpartie jeweils ist.

Aus der deutschen Patentanmeldung DE 10 2005 042 615 ist der Gedanke bekannt, den vom Wechselrichter der Spule zugeführten Strom zu messen, um dadurch unmittelbar auf die der Spule zum Messzeitpunkt zugeführte Leistung zurück zu schließen. So wird es möglich, die Leistungsfähigkeit der in der Schaltung eingesetzten Module voll auszunutzen, ohne das Risiko einer Überlastung der Spule in Kauf nehmen zu müssen.

### Das der Erfindung zugrunde liegende Problem

Der Erfindung liegt daher das Problem zugrunde, eine Schrumpfvorrichtung bzw. ein Schrumpfverfahren anzugeben, das dazu in der Lage ist, die Wärmebelastung der Hülsenpartie zu beschränken und im Idealfall auf das Notwendige zu begrenzen.

### Die erfindungsgemäße Lösung gemäß Anspruch 1

Erfindungsgemäß wird ein Verfahren zur Überwachung der Temperatur der Hülsenpartie eines Werkzeughalters, die in die Induktionsspule eines Schrumpfgeräts eingebracht ist, vorgeschlagen, das sich durch folgende Merkmale auszeichnet: Es wird die momentane Induktivität der Induktionsspule während des induktiven Heizens gemessen und als Maß für die Erwärmung genommen. Die Stromzufuhr zur Induktionsspule wird beeinflusst, wenn die momentane Induktivität einen vorgegebenen Wert annähert, erreicht oder überschreitet. Im Regelfall erfolgt dann ein Abschalten der Stromzufuhr.

Das Heranziehen der momentanen Induktivität als Maß für die aktuelle Temperatur der Hülsenpartie hat den großen Vorteil, dass die bisher die Messungen verfälschenden Störgrößen, wie Farbe, Beschaffenheit und Reinheit der Oberfläche der Hülsenpartie völlig ausgeblendet werden. Gegenüber bisher verwendeten elektrischen Größen, wie etwa die Messung bzw. Errechnung der bis zu einem gewissen Zeitpunkt aufgebrachten elektrischen Energie, hat die Messung der momentanen Induktivität den Vorteil, dass sie deutlich genauer ist. Somit wird das Schrumpffutter nicht immer zum Maximalwert bzw. über eine maximale Zeit hinweg erhitzt, sondern es wird passgenau Leistung induziert, was ferner zu einer Schonung des Schrumpffutters führt und ggf. das Wiederabkühlen beschleunigt.

Erfindungsgemäß ist vorgesehen, dass für einen oder mehrere Werkzeughalter mit unterschiedlichen Hülsenpartien gemessen und gespeichert wird, welche momentane Induktivität die Induktionsspule erreicht, wenn die in die Induktionsspule eingebrachte Hülsenpartie soweit erwärmt ist, dass ein- oder ausgeschrumpft werden kann

Dann wird zu Beginn eines neuen Schrumpfvorgangs abgefragt, welcher Werkzeughalter zum Ein- oder Ausschrumpfen in die Induktionsspule eingesetzt worden ist. Auf diese Abfrage an das System oder den Bediener kann der Benutzer das eingeben, oder es wird automatisch vom System erkannt. Dadurch kann für diesen Werkzeughalter ausgelesen werden, welche Induktivität das System Hülsenpartie/Induktionsspule hat, wenn die Hülsenpartie die gewünschte Temperatur hat, um dann den induktiven Heizvorgang zu starten.

Erfindungsgemäß wird der Aufheizzyklus beendet, wenn eine momentane Induktivität gemessen wird, die der gespeicherten Induktivität entspricht, die die Hülsenpartie dieses Werkzeughalters aufweist, wenn sie zum Ein- oder Ausschrumpfen bereit ist.

### Weitere Gestaltungsmöglichkeiten

Es ist eine weitere Aufgabe der Erfindung, eine Schrumpfvorrichtung anzugeben, die wesentlich kompakter ist als die bisher bekannten Schrumpfvorrichtungen und die daher einen geeigneten Ausgangspunkt bildet, um eine Schrumpfvorrichtung für den mobilen Einsatz zu konzipieren - idealerweise derart, dass die Schrumpfvorrichtung ein nach Art eines kleinen Koffers zu transportierendes Gerät ist, welches vom Bediener neuartig verwendet werden kann, indem es kurzerhand an die einem Werkzeugwechsel zu unterziehende Werkzeugmaschine gebracht und dort eingesetzt wird, um vor Ort an der Maschine einen Werkzeugwechsel vorzunehmen.

Dies schließt selbstverständlich nicht aus, dass die Schrumpfvorrichtung auch in herkömmlicher Weise stationär an einer entsprechenden Haltevorrichtung verwendet werden kann, die mobile Verwendung ist jedoch bevorzugt.

Die Lösung dieses Problems erfolgt durch eine Schrumpfvorrichtung zum Ein- und Ausspannen von einen Werkzeugschaft aufweisenden Werkzeugen, wie im Anschluss an den Hauptanspruch beschrieben.

Die Schrumpfvorrichtung umfasst eine Werkzeugaufnahme, die eine an ihrem freien Ende offene Hülsenpartie aus elektrisch leitendem Werkstoff zur reibschlüssigen Aufnahme des Werkzeugschafts aufweist.

Darüber hinaus gehört zu der Schrumpfvorrichtung eine die Hülsenpartie der Werkzeugaufnahme umfassende, mit einem vorzugsweise hochfrequenten (und idealerweise mit einer Frequenz von meist mehr als 1 kHz aufweisenden) Wechselstrom beaufschlagte, als Ring- oder Zylinderspule ausgebildete Induktionsspule zum Erwärmen der Hülsenpartie. Dabei trägt die Induktionsspule an ihrem Außenumfang einen ersten Mantel aus magnetisch leitfähigem und elektrisch nicht leitfähigem Material, etwa aus Ferrit oder aus einem Metallpulverwerkstoff. Elektrisch nicht leitfähiges Material im Sinne der Erfindung muss nicht unbedingt ein Isolator sein. Ein Material gilt dann als nichtleitend, wenn die durch Magnetfelder induzierten Wirbelströme nur eine geringfügige oder keine Erwärmung im Material verursachen.

Bestandteil der erfindungsgemäßen Schrumpfvorrichtung sind darüber hinaus Leistungshalbleiterbauelemente zur Herstellung eines die Induktionsspule speisenden Wechselstroms.

Typischerweise kommen hier sogenannte IGBT zum Einsatz. Es können aber auch Thyristoren oder MOSFET verwendet werden. Zu der erfindungsgemäßen Schrumpfvorrichtung gehört auch ein im Regelfall aus Kunststoff bestehendes Induktionsspulengehäuse. Ein solches Induktionsspulengehäuse entfaltet typischerweise keinerlei oder zumindest keine spürbare magnetische Abschirmwirkung. Es dient allein dazu, die in ihm befindlichen Bauteile vor Einflüssen von außen zu schützen und zugleich zu verhindern, dass die Bedienungsperson womöglich mit Spannung führenden Teilen in Kontakt kommen kann.

Die erfindungsgemäße Schrumpfvorrichtung zeichnet sich dadurch aus, dass die Induktionsspule und ihr erster Mantel am Außenumfang von einem zweiten Mantel umgeben sind. Dieser zweite Mantel besteht aus magnetisch nicht leitfähigem und elektrisch leitfähigem Material. Er ist so ausgelegt, dass ein etwaiges Streufeld elektrische Ströme in ihm induziert und so dem Streufeld Energie entzieht und es damit schwächt. Das bedeutet, dass er das in seiner Umgebung befindliche Streufeld total eliminiert oder zumindest soweit herabsetzt, dass der in seiner unmittelbaren Umgebung nun noch vorhandene Rest des Streufeldes - vorzugsweise ohne weitere Maßnahmen oder stattdessen im Verbund mit weiteren, flankierenden Maßnahmen - so gering ist, dass es keinen negativen Einfluss auf dort angeordnete Leistungshalbleiterbauelemente ausübt.

Weiterhin zeichnet sich diese erfindungsgemäße Lösung dadurch aus, dass zumindest die Leistungshalbleiterbauelemente gemeinsam mit der Induktionsspule in einem Induktionsspulengehäuse untergebracht sind. Das Induktionsspulengehäuse besteht vorzugsweise aus isolierendem Material oder ist außenseitig mit einem solchen überzogen.

Es umfasst umfangsseitig bzw. beherbergt in seinem Inneren folgende Bauteile: Die Induktionsspule, deren ersten und deren zweiten Mantel, sowie zumindest die Leistungshalbleiterbauelemente, vorzugsweise auch die unmittelbar im Leistungskreis liegenden Kondensatoren und/oder die Steuerung.

Unter einem "Umfassen" wird als Minimum ein außen Umschließen zumindest entlang des Umfangs der Induktionsspule verstanden. Im Regelfall wird das Induktionsspulengehäuse auch bis in den Bereich der oberen und unteren Stirnseite greifen und diese ganz oder teilweise abdecken. Es besitzt dann eine topfartige Gestalt. Das Induktionsspulengehäuse besitzt, zumindest an seinem Umfang, im Regelfall keine Wanddurchbrüche - außer etwa einem der Funktion geschuldeten lokalen Durchbruch, also für die Zuleitung o. ä.

### Weitere Gestaltungsmöglichkeiten

Vorzugsweise ist die Schrumpfvorrichtung so gestaltet, dass ihre Leistungshalbleiterbauelemente unmittelbar am Außenumfang des zweiten Mantels angeordnet sind. Unmittelbar am Außenumfang kann "mit etwa bis zu 60 mm, besser nur mit bis zu 15 mm maximalem radialen Abstand von der Außenumfangsfläche des zweiten Mantels der Induktionsspule angeordnet" bedeuten. Falls dieser fehlt, ist die Außenumfangsfläche des ersten Mantels maßgeblich.

Idealerweise stehen die Leistungshalbleiterbauelemente aber mit mindestens einer ihrer Oberflächen mit dem zweiten Mantel in direktem wärmeleitenden Kontakt, allenfalls unter Vermittlung einer Klebstoffschicht. Der zweite Mantel ist vorzugsweise so gestaltet, dass er einen Kühlkörper für die Leistungshalbleiterbauelemente bildet. Der zweite Mantel nimmt dann die in den Leistungshalbleiterbauelementen entstehende Verlustwärme auf und führt sie von diesen ab.

Als besonders günstig hat es sich erwiesen, wenn der zweite Mantel eine oder bevorzugt mehrere Aussparungen besitzt, die jeweils ein Leistungshalbleiterbauelement aufnehmen, bevorzugt so, dass das Halbleiterbauelement jeweils zumindest drei- oder besser vierseitig von dem zweiten Mantel umschlossen ist. Eine solche Aussparung in dem zweiten Mantel bildet einen Bereich, der vor dem restlichen womöglich noch vorhandenen magnetischen Streufeld besonders geschützt ist. Denn die Streufeldlinien vermögen in diese tiefer liegende Aussparung, in der sich das Leistungshalbleiterbauelement befindet, nicht einzudringen. Sie werden stattdessen von den umliegenden, höher bzw. weiter radial auswärtig liegenden Bereichen des zweiten Mantels eingefangen.

Als besonders günstig hat es sich erwiesen, wenn die Schrumpfvorrichtung, die zumindest einen Gleichrichter und zumindest einen Glättungskondensator sowie Schwingkreiskondensatoren umfasst, die an der vorrichtungsinternen Herstellung einer hochfrequenten Wechselspannung zum Speisen der Induktionsspule beteiligt sind, eine Induktionsspule besitzt, um deren Außenumfang herum die Kondensatoren gruppiert sind - im Regelfall so, dass die Kondensatoren, wenn man sie gedanklich um das Zentrum der Spule rotieren lässt, einen Zylinderring bilden, der die Induktionsspule umschließt. Auch hier ist es so, dass die Kondensatoren unmittelbar am Außenumfang des zweiten Mantels der Induktionsspule angeordnet sein sollten.

Dabei kann man in diesem Zusammenhang unter dem Begriff "unmittelbar am Außenumfang" einen maximalen radialen Abstand von bis zu 125 mm verstehen, vorzugsweise von bis zu 40 mm, gemessen vom Außenumfang des zweiten Mantels der Induktionsspule. Falls dieser fehlt, ist die Außenumfangsfläche des ersten Mantels maßgeblich.

Eine besonders günstige Ausführungsform der Schrumpfvorrichtung, für die nicht nur abhängiger, sondern auch selbstständiger, nicht von vorangehenden Ansprüchen abhängiger Schutz beansprucht wird, besteht zumindest aus einer Induktionsspule zum Ein- und Ausschrumpfen von Werkzeugschäften aus Werkzeughaltern, die von einem ersten Mantel umgeben ist, der aus magnetisch leitfähigem und elektrisch nicht leitfähigem Material besteht, wobei die Induktionsspule und ihr erster Mantel von einem zweiten Mantel umgeben sind, der aus magnetisch nicht leitfähigem und elektrisch leitfähigem Material besteht.

Für den zweiten Mantel gilt das bereits zuvor Gesagte. Idealerweise ist dieser zweite Mantel auch hier so ausgelegt, dass in ihm unter dem Einfluss eines ihn durchdringenden Streufeldes der Induktionsspule Wirbelströme erzeugt werden, die an der Außenoberfläche des zweiten Mantels zu einer Beseitigung des Streufeldeinflusses führen. Hier kann man sich gegebenenfalls das Prinzip der sogenannten Gegeninduktion zu Nutze machen. In dem zweiten Mantel werden durch das ihn durchdringende Streufeld Wirbelströme erzeugt, die ihrerseits ein Gegenfeld aufbauen, das das störende Streufeld beseitigt, zumindest soweit, dass im Nahbereich des zweiten Mantels Leistungshalbleiterbauelemente untergebracht werden können, ohne dauerhaft Schaden zu nehmen.

Eine andere besonders günstige Ausführungsform der Schrumpfvorrichtung, für die nicht nur abhängiger, sondern auch selbstständiger, nicht von vorangehenden Ansprüchen abhängiger Schutz beansprucht wird, besteht aus einer Induktionsspule zum Ein- und Ausschrumpfen von Werkzeugen aus Werkzeughaltern, die zusammen mit den ihr zugeordneten, zum Herstellen der die Induktionsspule speisenden, ggü. der Netzspannung umgewandelten Wechselspannung erforderlichen Leistungshalbleiterbauelementen im Induktionsspulengehäuse untergebracht ist, das sie umgibt.

Vorzugsweise sind auch noch weitere Bauteile, wie etwa im Leistungskreise liegende Kondensatoren und/oder ein Gleichrichter und/oder ein Trafo und/oder die elektronische Steuerung innerhalb des Induktionsspulengehäuses untergebracht. Ein zweiter Mantel ist bei dieser Ausführungsform nicht vorhanden. Er kann ggf. dadurch substituiert werden, dass die Leistungshalbleiterbauelemente und/oder die Steuerelektronik und/oder die Gleichrichter ihrerseits jeweils geschirmte Gehäuse besitzen oder in geschirmten Compartments untergebracht sind. Dabei sind vorzugsweise zumindest die Leistungshalbleiterbauelemente aktiv gekühlt, etwa mit Hilfe der Kühlmittelversorgung der Werkzeugmaschine.

Dieser Weg ist mit höherem Aufwand möglich und wird daher in das Schutzbegehren eingeschlossen.

Auf diese Art und Weise erhält man eine besonders kompakte Schrumpfvorrichtung, die nicht mehr auf einen separaten, neben der Schrumpfvorrichtung stehenden, mehr oder minder großen Schaltschrank angewiesen ist, in dem diese Bauteile separat untergebracht sind. Damit kommt man dem Ziel nach einem mobilen Schrumpfgerät ein gutes Stück näher.

Vorzugsweise sind alle Varianten der erfindungsgemäßen Schrumpfvorrichtung so gestaltet, dass die der Werkzeugaufnahme abgewandte Stirnseite der Induktionsspule mit einer Abdeckung aus magnetisch leitfähigem und elektrisch nicht leitfähigem Material versehen ist. Idealerweise ist diese Abdeckung als ein derartiger Polschuh ausgebildet, der die gesamte Stirnfläche der Induktionsspule vollflächig überdeckt. Das ist hier besonders wichtig, um den Außenraum von einem schädlichen Streufeld freizuhalten. In Ausnahmefällen gilt, dass die Abdeckung die gesamte Stirnfläche der Induktionsspule wenn nicht physisch, dann aber magnetisch vollflächig überdeckt.

Als besonders günstig hat es sich erwiesen, wenn die Abdeckung örtlich, im Zentrum nahe der Hülsenpartie, einen Abschirmkragen aufweist, der in Richtung der Längsachse L vorzugsweise um mindestens den zweifachen Betrag des Werkzeugdurchmessers über die freie Stirnseite der Hülsenpartie des Werkzeughalters aufragt. Ein solcher Abschirmkragen verhindert, dass der der Hülsenpartie nahe Werkzeugschaft einem schädlichen Streufeld ausgesetzt ist bzw. Ausgangspunkt für ein solches Streufeld ist, das sich von dort aus in die Umgebung erstreckt und den zu vermeidenden schädlichen Einfluss auf die im unmittelbaren Nahbereich der Induktionsspule angeordneten Leistungshalbleiterbauelemente ausübt.

Günstig ist es, wenn auch die der Werkzeugaufnahme zugewandte Stirnseite der Induktionsspule durch ein magnetisch leitendes und elektrisch nicht leitendes Material übergriffen und vorzugsweise bis auf die Aufnahmeöffnung für den Werkzeughalter vollständig abgedeckt wird.

Im Rahmen einer besonders bevorzugten Ausführungsform ist vorgesehen, dass die Schrumpfvorrichtung mindestens eine elektrische Platine besitzt, die unmittelbar am Außenumfang der Induktionsspule angeordnet ist oder den Außenumfang der Induktionsspule vorzugsweise nach Art eines in Umfangsrichtung überwiegend oder vollständig in sich geschlossenen Rings umgreift und die im Leistungskreis liegenden Kondensatoren und/oder die Leistungshalbleiterbauelemente elektrisch kontaktiert. Als Platine wird hier vorzugsweise eine etwa mindestens 0,75 mm dicke Platte mit darauf aufgebrachten Leiterbahnen aus metallischem Material verstanden, alternativ kann aber auch eine mit metallischen Leiterbahnen versehene Folie zum Einsatz kommen.

Besonders günstig ist es, wenn die Platine eine Platinenringscheibe ist, deren Rotationssymmetrieachse bevorzugt koaxial, ansonsten parallel zur Längsachse der Induktionsspule verläuft.

Im Idealfall sind zwei Platinenringscheiben vorhanden, zwischen denen entlang des Umfangs der Induktionsspule die im Leistungskreis liegenden Kondensatoren angeordnet sind.

Im Rahmen eines besonders bevorzugten Ausführungsbeispiels ist vorgesehen, dass der zweite Mantel einen oder mehrere Kühlkanäle bildet, die vorzugsweise in seinem Inneren verlaufen, wenn man den zweiten Mantel als Ganzes betrachtet. Zu diesem Zweck kann der zweite Mantel zwei- oder mehrteilig ausgeführt sein. Die einzelnen Teile des Mantels sind dann gegeneinander abgedichtet. Dies vereinfacht die Fertigung innenliegender Kühlkanäle wesentlich.

Eine andere besonders günstige Ausführungsform der Schrumpfvorrichtung, für die nicht nur abhängiger, sondern auch selbstständiger, nicht von vorangehenden Ansprüchen abhängiger Schutz beansprucht wird, ist eine Schrumpfvorrichtung, die sich dadurch auszeichnet, dass die Schrumpfvorrichtung eine Kupplung zum Befestigen der Schrumpfvorrichtung an der Aufnahme einer Werkzeugmaschinenspindel aufweist. Auch mit dieser Ausgestaltung kommt man dem Ziel, eine praxistauglich einsetzbare mobile Schrumpfvorrichtung zu schaffen, wesentlich näher. Denn es ist gefährlich, mit einem mobilen Schrumpfgerät zu arbeiten, das nur irgendwie in der Nähe der Werkzeugmaschine frei liegt, ohne irgendwie betriebssicher befestigt zu sein.

Dieses Problem entfällt mit der erfindungsgemäßen Kupplung. Die Kupplung ermöglicht es, die Schrumpfvorrichtung nach dem Ausbau des einem Werkzeugwechsel zu unterwerfenden Schrumpffutters an dessen Stelle an der Maschinenspindel zu befestigen. Hier wird die Schrumpfvorrichtung für die Dauer ihres Betriebs sicher gehalten und kann anschließend schnell wieder abgekoppelt und entfernt werden.

Die Kupplung kann in einer Variante auch dazu verwendet werden, um die Schrumpfvorrichtung im Werkzeugmagazin der Werkzeugmaschine aufzubewahren. Aus dem Magazin heraus kann sie durch den Werkzeugwechsler automatisch in die Maschinenspindel eingesetzt werden.

In einer weiteren Variante kann der Werkzeugwechsler die Schrumpfvorrichtung aus dem Werkzeugmagazin herausholen, aber nicht, um sie in die Maschinenspindel einzusetzen, sondern um sie direkt an eine in der Maschinenspindel eingespannte Schrumpfaufnahme heranzuführen und das Werkzeug ein- oder aus zu schrumpfen. Auch hierzu ist die der Schrumpfvorrichtung eigene Kupplung besonders vorteilhaft.

Idealerweise ist die Schrumpfvorrichtung zudem so beschaffen, dass sie dann, wenn sie eine interne Kühlung aufweist, durch das Kühlsystem der Werkzeugmaschine mit Kühlmittel gespeist werden kann.

Besonders zweckmäßig ist es, die Schrumpfvorrichtung so zu gestalten, dass die Induktionsspule mit ihrem ersten und, soweit vorhanden, mit ihrem zweiten Mantel und mindestens mit den Leistungshalbleiterbauelementen und/oder den Kondensatoren und/oder idealerweise auch die Elektronik zum Ansteuern der Leistungshalbleiterbauelemente im Inneren eines Spulengehäuses oder Spulengehäuserings untergebracht ist, der oder das zumindest den Umfang der Induktionsspule umschließt und vorzugsweise auch eine, besser beide Stirnseiten der Induktionsspule zumindest teilweise übergreift. Auf diese Art und Weise ergibt sich eine kompakte Einheit, in der gegebenenfalls alle betriebsnotwendigen Bauteile untergebracht sind und die durch das gemeinsame Gehäuse gegen Einflüsse von außen geschützt werden und zuverlässig vor einer Berührung spannungführender Teile durch den Bediener abgeschirmt sind.

Idealerweise ist das Spulengehäuse mit einem Stecker, typischerweise einem Schukostecker (vorzugsweise in Gestalt eines am Ende einer flexiblen Zuleitung befestigten Steckers), zum unmittelbaren Einspeisen von einphasiger Netzwechselspannung aus dem öffentlichen Netz (vorzugsweise 110 V oder 230 V) versehen.

Dies gestattet es, die Schrumpfvorrichtung nahezu überall zu betreiben. Es wird lediglich eine der für Elektrogeräte üblichen Steckdosen benötigt und ggf. ein übliches Verlängerungskabel. Es versteht sich, dass die Erfindung nicht zwingend auf diese besonders bevorzugte Art der Stromversorgung beschränkt ist. Die Stromversorgung kann auch 3-phasig und mit anderen Spannungen erfolgen, je nachdem, welche Leistung im Einzelfall notwendig ist und welche Stromversorgung am jeweiligen Standort zur Verfügung steht. Natürlich sind auch andere Spannungen möglich, insbesondere in Ländern, die eine andere Netzspannung im öffentlichen Netz verwenden.

Alternativ hat es sich als besonders günstig erwiesen, die Schrumpfvorrichtung mit einer Batterie zu versehen, die sie speist. Auch ein solches Gerät kann hochmobil sein. Es bietet sich dann an, ein Fahrgestell, etwa nach Art einer sehr wendigen Sackkarre, vorzusehen, das im unteren Bereich die Batterie trägt, etwa eine Fahrzeug-Starter Batterie, und beispielsweise in seinem oberen Bereich die Schrumpfvorrichtung bereithält.

Darüber hinaus wird auch Schutz für ein gesamtes Schrumpfsystem beansprucht, das aus einer Schrumpfvorrichtung der erfindungsgemäßen Art besteht und das sich dadurch auszeichnet, dass zu dem Schrumpfsystem zusätzlich unterschiedliche, an der Schrumpfvorrichtung befestigbare Kupplungen gehören, mittels derer die Schrumpfvorrichtung an der Spindel einer Werkzeugmaschine festgesetzt werden kann.

Dies gestattet es, die Schrumpfvorrichtung an unterschiedlich ausgerüsteten Werkzeugmaschinenspindeln zu befestigen, sodass es nicht mehr darauf ankommt, ob die Werkzeugmaschinenspindel zum Einziehen beispielsweise einer HSK Kupplung oder einer Steilkegelkupplung ausgerüstet ist.

Weitere Ausgestaltungsmöglichkeiten, Wirkungsweisen und Vorteile sind der nachfolgend unter Zuhilfenahme der Figuren vorgesehenen Beschreibung der Ausführungsbeispiele zu entnehmen.

Zwischen dem ersten und zweiten Mantel ist vorzugsweise ein Zwischenmantel verortet. Dieser dient vorzugsweise als kühlmittelführendes Element, um den zweiten Mantel bzw. die darauf angebrachten Halbleiterelemente vor Überhitzung zu schützen. Im Gegensatz zum zweiten Mantel ist es dabei vorzugsweise nicht gespalten, um eine einfache Kühlmittelführung zu gewährleisten. Daher ist der Zwischenmantel entweder zumindest gegenüber dem zweiten Mantel elektrisch (nicht thermisch) isoliert oder er besteht von vornherein aus elektrisch nicht leitendem Material. Es versteht sich von selbst, dass die Kühlmittelführung gegenüber den anderen Bauteilen der Schrumpfvorrichtung abgedichtet ist. Alternative Konzepte zur Kühlung des zweiten Mantels ohne einen besonders ausgebildeten Zwischenring sind denkbar.

Natürlich kann dieser Zwischenmantel auch so ausgebildet sein, dass er ergänzend als (zusätzliche) Abschirmung dient.

### Figurenliste

Die Figur 1 zeigt ein erstes Ausführungsbeispiel im Mittel-Längsschnitt.
Die Figur 2 zeigt das erste Ausführungsbeispiel in einem Mittel-Längsschnitt, der im Vergleich zur Figur 1 um 90° um die Längsachse L gedreht ausgeführt ist.

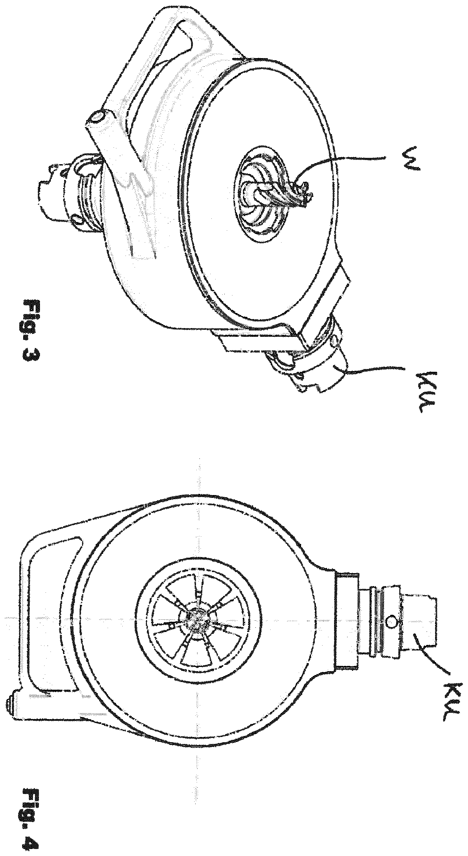

Die Figur 3 zeigt das erste Ausführungsbeispiel in perspektivischer Ansicht schräg von oben, bei abgenommenem Abschirmkragen.
Die Figur 4 zeigt das erste Ausführungsbeispiel frontal von oben, mit aufgesetztem Abschirmkragen.
Die Figur 5 zeigt den zweiten Mantel des ersten Ausführungsbeispiels, ausgerüstet mit Leistungshalbleiterbauelementen.

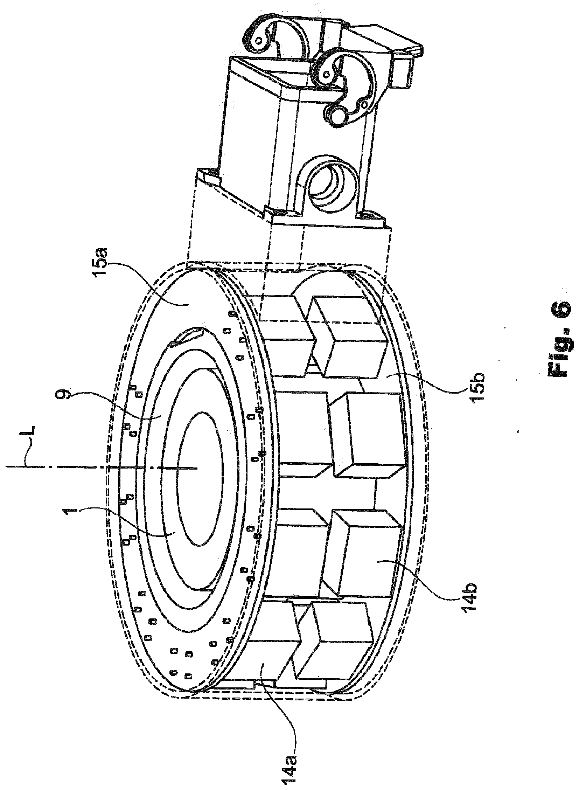

Die Figur 6 zeigt ein zweites Ausführungsbeispiel, das sich vom ersten Ausführungsbeispiel aber nur durch die Art der Befestigung an der Werkzeugmaschine oder am Stativ unterscheidet und insofern im Hinblick auf die Anordnung der Kondensatoren und der Platinen bzw. Leiterplatten, die hier gezeigt wird, mit dem ersten Ausführungsbeispiel identisch ist.
Die Figur 7 zeigt den Schaltplan einer Schaltung zum Speisen der Induktionsspule, die erfindungsgemäß für die Ausführungsbeispiele zum Einsatz kommen kann.
Die Figur 8 zeigt die unterschiedliche Flanken-Steilheit, die ein Maß für die Induktivität ist.
Die Figur 9 zeigt eine Schaltungsanordnung, wie sie erfindungsgemäß zum Einsatz kommen kann, um die Induktivität zu messen und gegebenenfalls auch die Geometrie der Hülsenpartie automatisch zu bestimmen.

### Ausführungsbeispiele

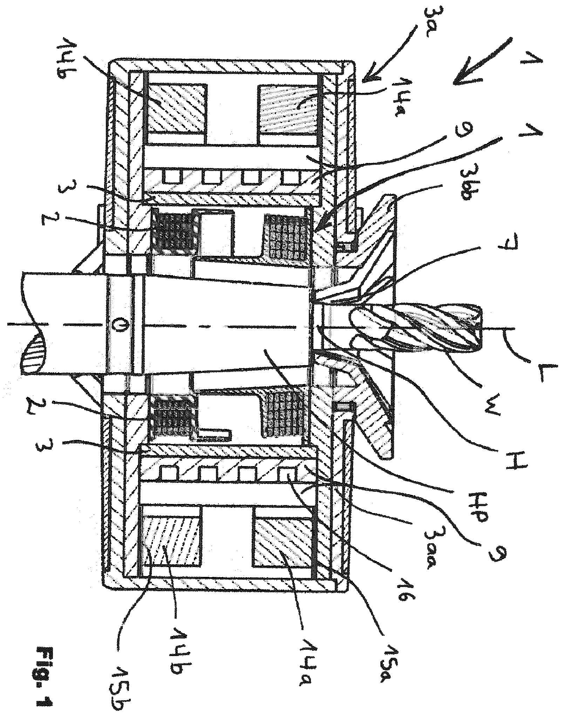

Die Figur 1 gibt einen ersten grundlegenden Überblick über die erfindungsgemäße Vorrichtung.

### Das Grundprinzip des induktiven Ein- und Ausschrumpfens

Gut zu erkennen ist hier die Induktionsspule 1 mit ihren einzelnen Windungen 2, in deren Zentrum ein Werkzeughalter 4 eingeschoben wird, um den Halteschaft H eines Werkzeugs W in die Hülsenpartie HP ein- oder aus zu schrumpfen . Das Funktionsprinzip, das dem Ein- und Ausschrumpfen zugrunde liegt, ist näher in der deutschen Patentanmeldung DE 199 15 412 A1 beschrieben. Deren Inhalt wird hiermit zum Gegenstand dieser Anmeldung gemacht.

### Die Abschirmung der Induktionsspule mit magnetisch leitenden und elektrisch nicht leitenden Mitteln

Die vorliegende Erfindung stellt hohe Anforderungen an die Abschirmung der Induktionsspule, auch an die konventionelle, ihrer Art nach bereits bekannte Abschirmung.

An ihrem Außenumfang ist die Induktionsspule mit einem ersten Mantel 3 aus elektrisch nicht leitendem und magnetisch leitendem Material versehen. Typischerweise besteht der erste Mantel 3 entweder aus einem Ferrit oder einem Metallpulver bzw. Metallsinterwerkstoff, dessen einzelne Partikel elektrisch isolierend voneinander getrennt sind und die auf diese Art und Weise insgesamt gesehen magnetisch leitend und elektrisch nicht leitend sind. Um patentrechtlich motivierte Umgehungsversuche auszuschließen, sei gesagt, dass in Ausnahmefällen stattdessen auch ein geblechter Mantel aus geschichteten Transformatorenblechen denkbar ist, die untereinander durch isolierende Lagen getrennt sind. In der überwiegenden Zahl der Fälle wird ein solcher geblechter Mantel aber den gewünschten Zweck nicht erfüllen.

Besonders bevorzugt ist der erste Mantel 3 so ausgeführt, dass er in Umfangsrichtung völlig in sich geschlossen ist, also die Umfangsfläche der Spule vollständig überdeckt, so dass auch in der Theorie keinerlei "magnetische Lücken" verbleiben, abgesehen von irrelevanten lokalen Durchbrüchen, wie etwa einzelnen und/oder kleinen lokalen Bohrungen o. ä.

Im Ausnahmefall ist es denkbar, den Mantel 3 so auszuführen, dass er aus einzelnen, den Umfang abdeckenden Segmenten besteht, die zwischen sich gewisse Freiräume aufweisen - nicht figürlich dargestellt. Derartiges kann im Einzelfall mehr schlecht als recht funktionieren, wenn die radiale Dicke der einzelnen Segmente in Relation zu der Dimension der Freiräume so groß gewählt ist, dass das von innen her in den jeweiligen Freiraum eintretende Feld von den Segmenten noch im Bereich des Freiraums angezogen wird und dadurch kein nennenswertes Streufeld die Freiräume passieren kann.

Vorzugsweise hat die Abschirmung aus magnetisch leitendem und elektrisch nicht leitendem Material mit dem ersten Mantel nicht bereits ihr Bewenden.

Stattdessen schließt sich an mindestens einer, besser beiden, Stirnseiten des ersten Mantels 3 eine magnetische Abdeckung 3a, 3b aus dem besagten Material an, die im Regelfall den ersten Mantel 3 kontaktieren.

Auf der dem Werkzeughalter abgewandten Stirnseite der Induktionsspule ist die magnetische Abdeckung 3a vorzugsweise als ganz oder bevorzugt abschnittweise auswechselbarer Polschuh ausgebildet, d. h. als ringförmiges Gebilde mit einer zentralen Öffnung, die einen Durchlass für das ein- oder auszuspannende Werkzeug bildet. Der Begriff "auswechselbar" beschreibt vorzugsweise eine werkzeuglose Auswechselbarkeit, die idealerweise mit Hilfe einer mit bloßer Hand betätigbaren Verbindung realisiert wird, etwa einer Bajonettverbindung. Auf diese Art und Weise können Werkzeughalter bearbeitet werden, die unterschiedlich große Werkzeugschaftdurchmesser aufnehmen. Dennoch ist gewährleistet, dass die Stirnseite der jeweiligen Hülsenpartie HP auf der Spuleninnenseite zur Anlage gegen den Polschuh gelangt.

Auf der dem Werkzeughalter zugewandten Stirnseite der Induktionsspule ist die magnetische Abdeckung 3b vorzugsweise als in sich ebene Ringscheibe ausgestaltet, die die Wicklungen der Induktionsspule idealerweise vollständig übergreift und einen zentralen Durchlass für die Hülsenpartie aufweist.

Für die Erfindung ist es zwar nicht obligatorisch, aber in höchstem Maße vorteilhaft, wenn die stirnseitig vorgesehenen magnetischen Abdeckungen 3a, 3b (zumindest lokal, vorzugsweise zu mindestens 75%, idealerweise vollständig rundum) in radialer Richtung über den ersten Mantel 3 hinausragen, vorzugsweise um ein Radialmaß, das die radiale Dicke des ersten Mantels 3 um ein Vielfaches übertrifft, in vielen Fällen um mindestens das 4-fache. Der radiale Überstand sollte vorzugsweise unter einem Winkel von 75° bis idealerweise 90° zur Längsachse L verlaufen. Auf diese Art und Weise entsteht ein in Umfangsrichtung um die Spule herumlaufender, verstärkt "geschirmter Graben", dessen erfindungsgemäße Funktion später noch näher erläutert wird.

Fig. 1 zeigt eine besonders bevorzugte Ausführungsform, bei der der Polschuh aus einer dauerhaft an Ort und Stelle verbleibenden Polringscheibe 3aa besteht, die außenseitig mit einem isolierenden Material belegt ist, beispielsweise Kunststoff. An der Polringscheibe 3aa ist auswechselbar ein Abschirmkragen 3ab befestigt. Wie man sieht, stehen die Polringscheibe 3aa und der Abschirmkragen 3ab vorzugsweise ohne magnetische Unterbrechung miteinander in Verbindung. Dies wird dadurch erreicht, dass der Abschirmkragen die Polringscheibe kontaktiert, vorzugsweise indem er von oben her auf ihr aufliegt.

Wie die Fig. 1 ebenfalls zeigt, kann es besonders günstig sein, wenn der Abschirmkragen einen Anschlagabschnitt AS zur Anlage an der Hülsenpartie aufweist, der bis in das Innere der Induktionsspule hineinragt.

Wie man ebenfalls gut anhand der Fig. 1 sieht, ist es in vielen Fällen besonders günstig, wenn der Abschirmkragen in einzelne Segmente aufgeteilt ist, die schräg mit einer Bewegungskomponente in radialer und einer Bewegungskomponente in Richtung parallel zur Längsachse L verschiebbar sind - so dass sowohl der freie Innendurchmesser des Abschirmkragens verstellbar ist, der als Werkzeugdurchlass zur Verfügung steht, als auch die Tiefe, mit der das der Hülsenpartie zugewandte stirnseitige Ende des Abschirmkragens in das Innere der Induktionsspule eintaucht.

Idealerweise weist der Abschirmkragen jedenfalls eine kegelförmige Gestalt bzw. einen sich in Richtung der Spulenlängsachse zur Werkzeugspitze hin erweiternden Verlauf auf.

Um die für den erfindungsgemäßen Zweck wünschenswerte, qualitativ besonders hochwertige Abschirmung zu gewährleisten, ragt der Abschirmkragen in Richtung der Längsachse L um mindestens den zweifachen, besser um mindestens den 2,75-fachen Betrag des Werkzeugdurchmessers über die freie Stirnseite der Hülsenpartie des Werkzeughalters auf.

### Die zusätzliche Abschirmung mit einem elektrisch leitenden und magnetisch nicht leitenden Mittel

Auch eine sorgfältige Abschirmung mithilfe des ersten Mantels 3 und den magnetischen Abdeckungen 3a, 3b vermag nicht zu verhindern, dass am Außenumfang der Induktionsspule bzw. an oder im Bereich der Umfangsoberfläche des ersten Mantels 3 noch ein gewisses, für Halbleiterbauteile schädliches Streufeld anzutreffen ist. Aufgrund dessen verbietet es sich eigentlich, in diesem Bereich elektronische Bauteile anzuordnen, die empfindlich auf durch das Streufeld induzierte Störspannungen reagieren. So, wie das insbesondere bei Halbleiterbauteilen der Fall ist, die einen maßgeblichen Teil des in Resonanznähe betriebenen Schwingkreises bilden, der zur Speisung der Induktionsspule eingesetzt wird.

Um die Abschirmung noch weiter zu verbessern, ist erfindungsgemäß vorgesehen, die Induktionsspule und ihren ersten Mantel 3 an dessen Außenumfang von einem zweiten Mantel 9 zu umgeben - zumindest bei Verzicht auf eine Kühlung des zweiten Mantels vorzugsweise so, dass der erste und der zweite Mantel einander berühren, idealerweise auf dem überwiegenden bzw. gesamten Teil ihrer einander zugewandten Umfangsflächen.

Dieser zweite Mantel 9 ist aus magnetisch nicht leitfähigem und elektrisch leitfähigem Material hergestellt. Unter "elektrisch leitfähig" wird hier ein nicht nur lediglich lokal, sozusagen "kornweise" elektrisch leitfähiges Material verstanden, sondern ein Material, das in erfindungsrelevantem Umfang die Ausbildung von Wirbelströmen zulässt, dazu sogleich.

Das Besondere an dem zweiten Mantel ist, dass er bevorzugt so ausgelegt und bevorzugt in radialer Richtung so dick ausgelegt ist, dass in ihm unter dem Einfluss des ihn durchdringenden Streufeldes der Induktionsspule Wirbelströme erzeugt werden, die eine Schwächung des unerwünschten Streufeldes bewirken. Man macht sich hier also das Prinzip der aktiven Abschirmung durch ein Gegenfeld zu nutze. Dadurch kann erreicht werden, dass an der Außenoberfläche des zweiten Mantels das Streufeld um mehr als 50% verringert wird, idealerweise um mindestens 75%. Entscheidend ist, dass das Streufeld an der Oberfläche des zweiten Mantels jedenfalls soweit verringert wird, dass dort gefahrlos Halbleiterbauteile angeordnet werden können.

Entscheidend ist, dass dieser zweite Mantel in radialer Richtung bzw. magnetisch durch den ersten Mantel von der Induktionsspule getrennt ist, da er sich sonst zu stark aufheizen würde - was hier nicht der Fall ist, da er nicht im Hauptfeld liegt, sondern nur im Streufeld.

Für den hier im Zusammenhang mit dem zweiten Mantel verwendeten Begriff "Mantel" gilt das oben im Zusammenhang mit ersten Mantel Definierte sinngemäß. Allerdings bedeutet der Begriff "Mantel" im Zusammenhang mit dem zweiten Mantel nicht, dass ein in Umfangsrichtung endloser Rohrabschnitt zum Einsatz kommen muss. Stattdessen ist der Mantel vorzugsweise in einzelne Segmente aufgeteilt, die elektrisch voneinander isoliert sind, etwa durch mit Klebstoff oder Kunststoff gefüllte Fugen. Diese Ausgestaltungsart dient dazu, einen Reihenkurzschluss zu verhindern, wie er bei einem endlosen Rohrabschnitt die Folge wäre, wenn an einem Leistungshalbleiterbauelement ein Spannungsdurchschlag in den zweiten Mantel erfolgt und alle Leistungshalbleiterbauelemente längs des zweiten Mantels auf dem gleichen Potential anliegen.

Wichtig ist aber, dass die einzelnen Segmente jeweils so groß ausgeführt sind, dass das Streufeld in ihnen feldschwächende Wirbelströme induzieren kann, im Einzelfall ist dabei kein Vollmantel erforderlich, sondern es kann eine leitfähige (in Ansehung der konkreten individuellen Verhältnisse) hinreichend dick dimensionierte Gitterstruktur ausreichen.

Zu betonen ist an dieser Stelle, dass ein lediglich zu mechanischen Schutzzwecken vorgesehenes, in radialer Richtung dünnwandiges Gehäuse nicht ausreicht, selbst wenn es aus elektrisch leitfähigem Material bestanden haben sollte. Um den gewünschten, erfindungsgemäßen Effekt zu erzielen, ist eine zielgerichtete Auslegung der radialen Wandstärke des zweiten Mantels erforderlich.

Bevorzugtes Material zur Herstellung des zweiten Mantels 9 ist Aluminium.

Der zweite Mantel 9 kann in seinem Inneren vorzugsweise in Umfangsrichtung verlaufende, ggf. schraubenförmig umlaufende Kühlkanäle aufweisen, die letzteren Falls idealerweise ein Gewinde bilden.

In diesem Falle ist es besonders günstig, den zweiten Mantel 9 zwei- oder mehrteilig auszuführen. Dessen erster Teil trägt dann an seinem Umfang in ihn eingearbeitete Kühlkanäle, die dessen zweiter Teil abdichtet.

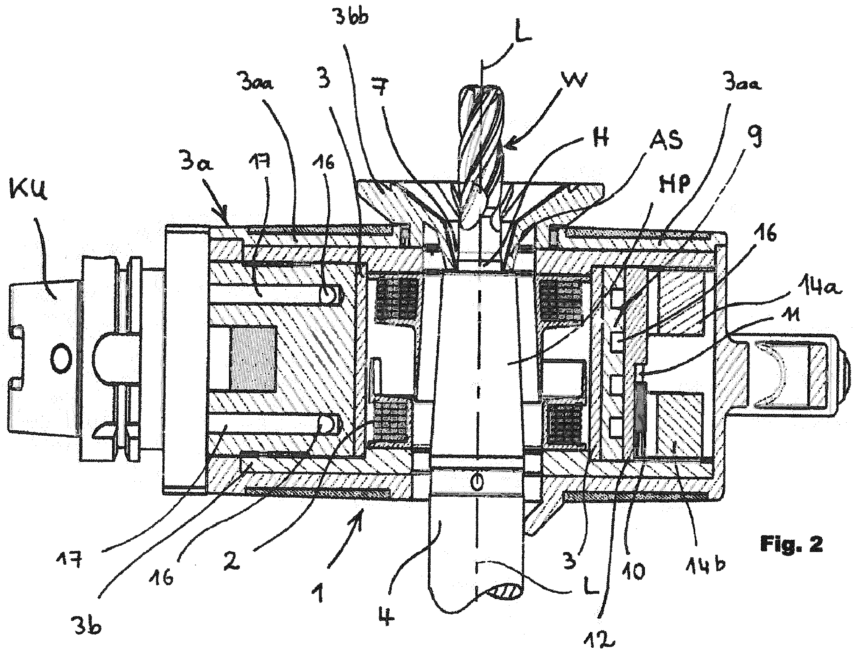

An diesem Punkt ist bereits auf den linken Teil der Fig. 2 hinzuweisen. Hier sieht man die Kühlmittelspeiseleitungen 17, die frisches Kühlmittel am Anfang des oder der Kühlkanäle 16 einspeisen und verbrauchtes Kühlmittel abführen.

### Die besondere Anordnung der Leistungshalbleiterbauelemente, der Kondensatoren und ggf. der elektronischen Steuerung

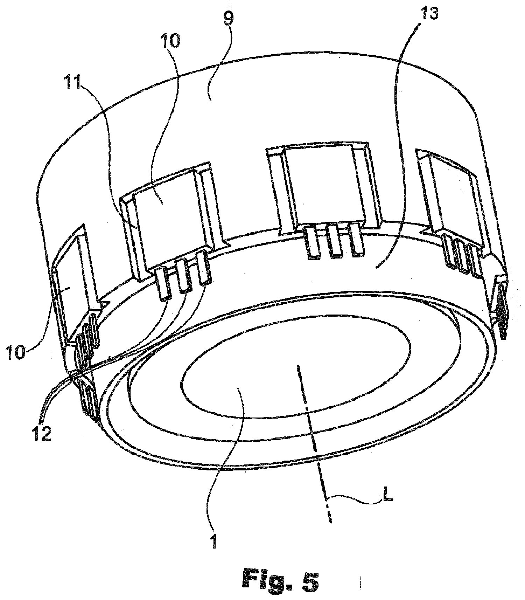

Wie man gut anhand der Fig. 2 und der Fig. 5 sieht, ist der zweite Mantel an seinem Umfang von den nachfolgend noch näher zu erläuternden Leistungshalbleiterbauelementen 10 umgeben, die unmittelbar am Außenumfang des zweiten Mantels angeordnet sind.

Im vorliegenden Fall ist es so, dass die Leistungshalbleiterbauelemente zwei große Hauptflächen haben und vier kleine Seitenflächen. Die großen Hauptflächen sind vorzugsweise mehr als viermal größer als jede der einzelnen Seitenflächen. Die Leistungshalbleiterbauelemente 10 sind so angeordnet, dass eine ihrer großen Hauptflächen in wärmeleitendem Kontakt mit dem zweiten Mantel 9 steht, im Regelfall an dessen Außenumfang.

Idealerweise ist die betreffende große Hauptfläche des Leistungshalbleiterbauelements 10 mithilfe eines wärmeleitenden Klebstoffs an die Umfangsoberfläche des zweiten Mantels 9 angeklebt. Der zweite Mantel 9 hat also hier eine Doppelfunktion. Er verbessert also nicht nur die Abschirmung und macht dadurch die Anordnung der Leistungshalbleiterbauelemente in seinem radialen Nahbereich (weniger als 10 cm Entfernung von seiner Umfangsoberfläche) möglich, sondern fungiert optional zugleich als Kühlkörper für die Leistungshalbleiterbauelemente.

Besonders bevorzugt ist der zweite Mantel 9 mit Aussparungen 11 versehen, von denen je eine ein Leistungshalbleiterbauelement aufnimmt, vgl. Fig. 5. Gut zu erkennen ist, dass die Aussparungen 11 idealerweise so gestaltet sind, dass sie das von ihnen aufgenommene Leistungshalbleiterbauelement 10 an vier Seiten vollständig umgeben. Das Leistungshalbleiterbauelement 10 sitzt auf diese Art und Weise sozusagen in einer Senke und ist dadurch besonders gut abgeschirmt.

Wie man ebenfalls gut sieht, besitzt jedes der Leistungshalbleiterbauelemente 10 drei Anschlüsse 12 zur Spannungsversorgung. Die Anschlüsse 12 jedes Leistungshalbleiterbauelements 10 ragen hier in einen einen Rücksprung 13 bildenden Bereich des zweiten Mantels 9 hinein, vgl. Fig. 5. Dieser optionale Rücksprung 13 erleichtert ggf. die Verkabelung der Anschlüsse 12 des jeweiligen Leistungshalbleiterbauelements 10.

Im erörterten Ausführungsbeispiel hat es allerdings mit der neuartigen Anordnung der Leistungshalbleiterbauelemente 10, noch nicht sein Bewenden. Stattdessen ist hier eine besonders bevorzugte Lösung realisiert, bei der die Kondensatoren 14a, 14b am Außenumfang der Induktionsspule um diese herumgruppiert sind. Bei den Kondensatoren 14a handelt es sich bevorzugt um Glättungskondensatoren, die unmittelbarer Bestandteil des Leistungskreises sind, bei den Kondensatoren 14b handelt es sich bevorzugt um Schwingkreiskondensatoren, die ebenfalls unmittelbarer Bestandteil des Leistungskreises sind. Die Kondensatoren 14a, 14b bilden hier, wenn man sie gedanklich um das Zentrum der Spule rotieren lässt, einen Zylinderring.

Dieser Zylinderring umgibt die Induktionsspule und vorzugsweise auch die an deren Umfang um diese herumgruppierten Leistungshalbleiterbauelemente.

Um die Kondensatoren 14a, 14b elektrisch anzuschließen, sind hier mehrere elektrische Platinen 15a, 15b vorgesehen, die jeweils den Außenumfang der Induktionsspule umgreifen. Jede dieser Platinen 15a, 15b bildet vorzugsweise eine Ringscheibe. Jeder der Platinen besteht vorzugsweise aus FR4 oder ähnlichen für Platinen gebräuchlichen Materialien. Wie man sieht, ist die Rotationssymmetrieachse jeder der beiden hier als Platinenringscheiben ausgeführten Platinen hier koaxial zur Längsachse der Spule. Optional ist jede der Platinen an der Grabeninnenseite der magnetischen Abdeckungen 3a, 3b befestigt, dort wo die magnetischen Abdeckungen 3a, 3b in radialer Richtung über den zweiten Mantel hinausragen.

Die obere der beiden elektrischen Platinen 15a trägt die Kondensatoren - etwa die Glättungskondensatoren 14a oder die Schwingkreiskondensatoren 14b -, deren Anschlussfahnen die Platine durchgreifen oder mithilfe der SMD-Technik mit der Platine verbunden sind, so, dass die Glättungskondensatoren von der Platine herabhängen. Die untere der beiden Platinen ist entsprechend aufgebaut, die Kondensatoren - etwa die Schwingkreiskondensatoren 14b oder die Glättungskondensatoren 14a -, stehen nach oben von ihr ab. Insgesamt ist es so, dass die beiden elektrischen Platinen 15a, 15b sämtliche Kondensatoren 14a, 14b des die Induktionsspule speisenden Leistungskreises zwischen sich aufnehmen, gesehen in Richtung entlang zur Längsachse der Induktionsspule.

Man kann also sagen, dass die Leistungshalbleiter einen ersten gedachten Zylinder bilden, der die Induktionsspule umringt, und die Kondensatoren 14a, 14b einen zweiten gedachten Zylinder bilden, der den ersten gedachten Zylinder umringt.

Vorzugsweise bilden die gegenüber dem Streufeld nur weniger empfindlichen Kondensatoren den gedachten, äußeren Zylinder, während die auf einen möglichst streufeldarmen Einbauraum angewiesenen Leistungshalbleiterbauelemente den gedachten, inneren Zylinder bilden.

### Die besondere Ausgestaltung der Steuerungsplatine oder anderer Platinen

Es kann erforderlich sein, die Platine, auf der die Steuerung sitzt, und/oder die Platinen, die die unmittelbar im Leistungskreis liegenden Kondensatoren kontaktieren, geschirmt aus zuführen.

Zu diesem Zweck kommen vorzugsweise mehrschichtige Platinen zum Einsatz bzw. die sog. Multilayertechnik. Dabei werden zwei oder mehr Platinen aufeinandergelegt. Die Leiterbahnen verlaufen überwiegend bzw. im Wesentlichen im Inneren des so entstandenen Platinenpakets. Zumindest eine außenliegende Hauptfläche des Platinenpakets ist im Wesentlichen vollflächig metallisiert und dient daher als Schirmung.

### Die besondere Versorgung der Induktionsspule

Zunächst sei als allgemeine Bemerkung vorweggeschickt, dass die von Fig. 1 gezeigte Spule vorzugsweise nicht über ihre gesamte Länge hinweg "voll bewickelt" ist. Stattdessen besteht sie bevorzugt aus zwei, im Regelfall im Wesentlichen zylindrischen Wicklungspaketen. Diese bilden jeweils eine Stirnseite der Induktionsspule. Vorzugsweise ist die eine (hier die untere) der beiden Spulen in Richtung parallel zur Längsachse L beweglich und damit im laufenden Betrieb so verstellbar, dass immer nur der Bereich der jeweiligen Hülsenpartie erhitzt wird, der der Erhitzung bedarf.

Das verhindert eine unnötige Erhitzung und auch die Erzeugung eines unnötig starken Feldes, was sich natürlich entsprechend auf das anzutreffende Streufeld auswirkt. Eine derartige Spule trägt zudem zur Verringerung der Blindleistung bei, da ihr die Wicklungen im Mittenbereich fehlen, die unter dem Gesichtspunkt der möglichst effektiven Beheizung der Hülsenpartie des Werkzeughalters nicht unbedingt benötigt werden, die aber - wenn vorhanden - die Tendenz haben, zusätzliche Blindleistung produzieren, ohne einen wirklich wichtigen Beitrag zur Beheizung zu leisten.

Um die Induktionsspule so zu versorgen, dass sie die gewünschte Wirkung entfaltet und die Hülsenpartie eines Werkzeughalters hinreichend schnell aufheizt, genügt es im Regelfall nicht, die Induktionsspule kurzerhand unmittelbar an die 50 Hz Netzwechselspannung anzuschließen.

Stattdessen muss die Frequenz der Spannung, mit der die Spule gespeist wird, erhöht werden. Das erfolgt im Regelfall elektronisch mithilfe eines Frequenzumrichters. Speist man die Spule nun allerdings einfach mit einen Frequenzumrichter, ohne weitere spezielle Maßnahmen zu treffen, wie in der Praxis bisher häufig geschehen, dann kommt es zu hohen Blindleistungsverlusten.

Diese Blindleistungsverluste sind unter dem Gesichtspunkt der Energieeffizienz nicht weiter relevant, da die Einschaltdauern bei einem Schrumpfgerät klein sind - schon nach wenigen Sekunden Einschaltdauer hat die Induktionsspule die Hülsenpartie eines Werkzeughalters so weit erhitzt, dass der Werkzeugschaft ein- oder ausgebaut werden kann, weshalb die Blindleistungsverluste bisher nicht als störend empfunden wurden.

Die Erfinder haben nun erkannt, dass die Vermeidung von Blindleistungsverlusten gleichwohl wichtig ist, da sie zur Erwärmung unter anderem der Induktionsspule selbst führen. Um die Blindleistungsverluste vermeiden zu können, ist erfindungsgemäß vorgesehen, die Induktionsspule über einen Schwingkreis zu versorgen.

Bei dem erfindungsgemäßen Schwingkreis schwingt der überwiegende Teil der benötigten Energie periodisch (hochfrequent) zwischen der Induktionsspule und einer Kondensatoreinheit hin- und her. Dadurch muss in jeder Periode bzw. periodisch nur die dem Schwingkreis durch seine Heizleistung und seine sonstige Verlustleistung entzogene Energie nachgespeist werden. Somit entfallen die bisherigen, sehr hohen Blindleistungsverluste. Das führt dazu, dass sich die Bauteile der Leistungselektronik erstmals so stark miniaturisieren lassen, dass - meist bei zusätzlicher Lösung des besonderen Abschirmungsproblems, das dieser Einbau aufweist - sie in das Spulengehäuse integriert werden können.

Somit rückt ein tragbares Induktions-Schrumpfgerät in greifbare Nähe, das wegen seines Gesamtgewichts von unter 10 kg vom Benutzer zur Werkzeugmaschine getragen werden kann, um es vor Ort einzusetzen.

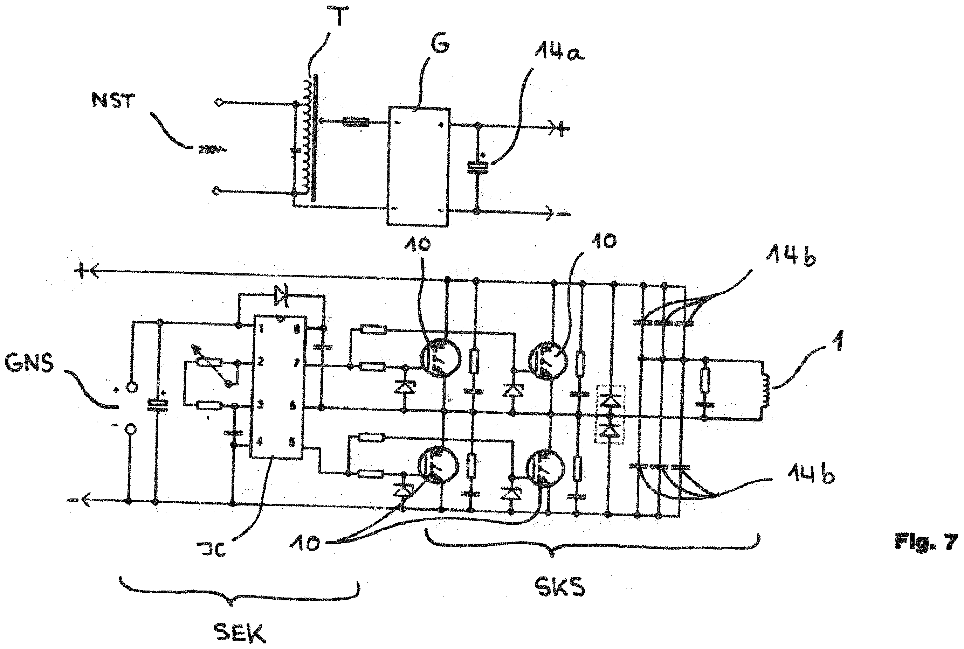

Die die Induktionsspule speisende Leistungselektronik ist vorzugsweise so gestaltet, wie das die Figur 7 wiedergibt und zeichnet sich dann durch folgende Merkmale aus: Eingangsseitig wird die Leistungselektronik vorzugsweise mit dem allgemein verfügbaren Netzstrom NST, der in Europa 230 V / 50 Hz / 16Amax (in anderen Ländern entsprechende Werte z. B. USA 110 V) beträgt, gespeist. Das wird dadurch, dass die bisherigen Blindleistungen vermieden werden, erstmals möglich, während bisher ein 380 V "Drehstrom"-Anschluss erforderlich war.

Dies schließt nicht aus, dass unter besonderen Bedingungen, z. B. hoher Leistungsbedarf, dennoch ein 3-phasiger Drehstromanschluss notwendig wird. Selbstverständlich kann auch bei geringem Leistungsbedarf mit Drehstrom gearbeitet werden.

Der Netzstrom wird dann bevorzugt auf eine höhere Spannung hochtransformiert (Trafo T), um die bei vorgegebener Leistung fließenden Ströme zu verringern. Der aus dem Netz bezogene Strom wird vom Gleichrichter G in Gleichstrom umgewandelt, der seinerseits durch den oder die Glättungskondensatoren 14a geglättet wird.

Mit diesem Gleichstrom wird der eigentliche Schwingkreis SKS gespeist. Das Rückgrat des Schwingkreises bilden die Leistungshalbleiterbauelemente 10, die Schwingkreiskondensatoren 14b und die zum Ein- und Ausschrumpfen dienende Induktionsspule 1.

Gesteuert bzw. geregelt wird der Schwingkreis von der Steuerelektronik SEK, die im Wesentlichen als IC ausgebildet ist und die über einen eigenen Eingang GNS mit Gleichstrom-Niederspannung gespeist wird, die ggf. hinter dem Gleichrichter G und dem oder den Glättungskondensatoren 14a über einen entsprechenden Spannungsteiler-Widerstand abgegriffen wird.

Die Leistungshalbleiterbauelemente 10 werden vorzugsweise durch Transistoren des Typs "Insulated-Gate Bipolar Transistor" kurz IGBT verwirklicht.

Die Steuerelektronik SEK schaltet die IGBT bevorzugt mit einer Frequenz, die die sich am Schwingkreis SKS einstellende Arbeitsfrequenz vorgibt.

Wichtig ist, dass der Schwingkreis SKS niemals genau in Resonanz arbeitet, der bei einer Phasenverschiebung zwischen Spannung U und Strom I von cos ϕ =1 liegt. Dies würde hier zur raschen Zerstörung der Leistungshalbleiterbauelemente 10 durch die Spannungsspitzen führen. Stattdessen ist die Steuerelektronik SEK so gestaltet, dass sie die Leistungselektronik bzw. deren Schwingkreis SKS in einem Arbeitsbereich betreibt, der lediglich nahe der Resonanz bzw. Eigenfrequenz des Systems liegt.

Vorzugsweise wird der Schwingkreis so gesteuert bzw. geregelt, dass gilt 0,9 ≤ cos ϕ ≤ 0,99. Besonders günstig sind Werte, die im Bereich 0,95 ≤ cos ϕ ≤ 0,98 liegen. Dies führt nochmals zu einer Vermeidung von Spannungsspitzen und leistet daher der Miniaturisierung weiteren Vorschub.

Am Rande ist noch anzumerken, dass der minimierte Energieverbrauch erstmals einen Batteriebetrieb gestattet. Als geeignete Hochstrombatterie kann im einfachsten Fall eine Kraftfahrzeug-Starterbatterie zum Einsatz kommen.

### Die besondere Temperaturmessung

Es ist wünschenswert, Schrumpfgeräten der gattungsgemäßen Art ein Optimum an Betriebssicherheit zu verleihen. Dazu gehört zumindest eine automatische Steuerung der Heizzeit und/oder Heizleistung.

Die sogenannte Induktivität u = di/dt ist eine charakteristische Größe wechselstromdurchflossener Spulen. Bei Schrumpfgeräten der gattungsgemäßen Art bildet der in den von der Induktionsspule umfangsseitig umschlossenen Raum eingeschobene Werkzeughalter mit seiner Hülsenpartie einen wesentlichen Bestandteil des magnetischen Kreises. Die Hülsenpartie bildet nämlich den Metallkern der Spule. Das Maß der zu messenden Induktivität hängt daher entscheidend davon ab, in welchem Maß die Hülsenpartie das Zentrum bzw. den sogenannten Kern der Induktionsspule ausfüllt, d. h. ob die betreffende Hülsenpartie einen kleineren oder größeren Durchmesser bzw. mehr oder weniger Masse besitzt und somit einen kleineren oder größeren Eisenkern der Spule bildet.

Der Erfinder hat nun erstmals erkannt, dass die messbare Induktivität einer zum Schrumpfen eingesetzten Induktionsspule nicht nur von der Geometrie der Hülsenpartie abhängt, sondern in praktisch verwertbarem Umfang auch von der Temperatur der Hülsenpartie des Werkzeughalters. Je heißer die Hülsenpartie ist, desto größer ist die Induktivität des Systems aus der Hülsenpartie und der Induktionsspule.

Das wird sich erfindungsgemäß zu Nutze gemacht, um die Sicherheit der Schrumpfvorrichtung zu verbessern. Die Verfahrensführung bzw. die Verwendung und die dementsprechend konzipierte Schrumpfvorrichtung machen sich folgenden Gedanken zu Nutze:
Die Zahl der unterschiedlichen zum Einsatz auf der Schrumpfvorrichtung in Frage kommenden Werkzeughalter ist endlich. Aufgrund dessen ist es nicht schwer, alle oder zumindest die wichtigsten auf der Schrumpfvorrichtung zum Einsatz kommenden Werkzeughalter herstellerseitig zu vermessen und parametrisieren.

Im Übrigen kann dem Verwender leicht an die Hand gegeben werden, wie er Hülsenpartien von noch nicht werkseitig gespeicherten Werkzeughaltern vermessen und zusätzlich abspeichern kann. Das erfindungsgemäße Gerät verfügt optional über entsprechende Mittel oder Eingabemöglichkeiten. Im Idealfall erkennt es auf Basis der bisherigen Paramater und Datenbank die jeweiligen Konturen durch eine Messung und schließt dann auf die Induktivität bei dem verwendeten Schrumpffutter.

Dieses Vermessen erfolgt der Gestalt, dass die Hülsenpartien der entsprechenden Werkzeughalter in das Innere der Induktionsspule eingebracht werden und dann jeweils gemessen wird, welche momentanen Induktivitäten das System aus der Induktionsspule und der in sie eingebrachten Hülsenpartie aufweist, wenn die Hülsenpartie ihre maximale Temperatur erreicht hat. Als maximale Temperatur wird im Regelfall die Temperatur genommen, bei der optimal ein- und/oder ausgeschrumpft werden kann. So wird verhindert, dass die Hülsenpartie unnötig stark erhitzt wird und dann unnötig lange wieder abkühlen muss. Rein aus patentrechtlichen Gründen oder alternativ sei gesagt, dass die maximale Temperatur auch etwas höher gelegt werden kann. Die maximale Temperatur, die den Grenzwert bildet, ist dann die maximal zulässige Temperatur, bevor Zerstörung eintritt, als sogenannter Überhitzungsschutz.

Die so gemessenen Maximalwerte werden für jeden Werkzeughalter gespeichert, im Regelfall in der Schrumpfvorrichtung bzw. in deren Steuerung. Dort stehen sie für einen jederzeitigen Vergleich zur Verfügung.

Um einen bestimmten Werkzeughalter zu schrumpfen, wird die Hülsenpartie in die Induktionsspule eingebracht und in diesem Zusammenhang abgefragt, welcher Werkzeughalter nun einem Ein- oder Ausschrumpfen unterworfen werden soll. Nachdem der Benutzer das eingegeben hat oder dies automatisch erkannt wurde, wird für diesen Werkzeughalter ausgelesen, welche Induktivität das System Hülsenpartie/Induktionsspule hat, wenn die Hülsenpartie die gewünschte Temperatur hat. Sodann wird der induktive Heizvorgang gestartet. Dabei wird jeweils die momentane Induktivität gemessen. Sobald sich die aktuell gemessene momentane Induktivität dem Grenzwert (also der gespeicherten Induktivität) nähert oder diese überschreitet, wird die Stromzufuhr zu Induktionsspule beeinflusst - im Regelfall abgeschaltet oder zumindest soweit verringert, dass keine Schäden entstehen können.

Vorzugsweise wird dafür Sorge getragen, dass die induktive Beheizung eines Werkzeughalters bzw. seiner Hülsenpartie nur dann gestartet werden kann, wenn sichergestellt ist, dass auch wirklich ein Werkzeughalter mit einer kalten Hülsenpartie in die Induktionsspule eingebracht worden ist.

Um dies zu erreichen, erfolgt herstellerseitig eine weitere Vermessung.

Diese Messung hat die Gestalt, dass die Hülsenpartien der entsprechenden Werkzeughalter in das Innere der Induktionsspule eingebracht werden und dann jeweils gemessen wird, welche Induktivität das System aus der Induktionsspule und der in sie eingebrachten Hülsenpartie aufweist, wenn die Hülsenpartie kalt ist, also beispielsweise unter 35° erwärmt ist. Die so gemessenen Kaltwerte werden für jeden Werkzeughalter gespeichert, im Regelfall in der Schrumpfvorrichtung bzw. in dessen Steuerung. Dort stehen sie für einen am Anfang eines Schrumpfprozesses durchzuführenden Vergleich zur Verfügung.

Sobald der Benutzer eingegeben hat oder automatisch erkannt worden ist, welcher Werkzeughalter mit welcher Hülsenpartie in die Induktionsspule eingebracht worden ist, wird die Induktionsspule zumindest kurzzeitig bestromt und dabei die momentane Induktivität gemessen. Stellt sich dabei heraus, dass die momentane Induktivität oberhalb des gespeicherten Kaltwerts liegt, dann ist dies ein Zeichen dafür, dass sich eine bereits heiße Hülsenpartie eines Werkzeughalters im Inneren der Induktionsspule befindet. Daraufhin wird eine Fehlermeldung ausgegeben und/oder vorzugsweise der Heizprozess nicht gestartet bzw. abgebrochen.

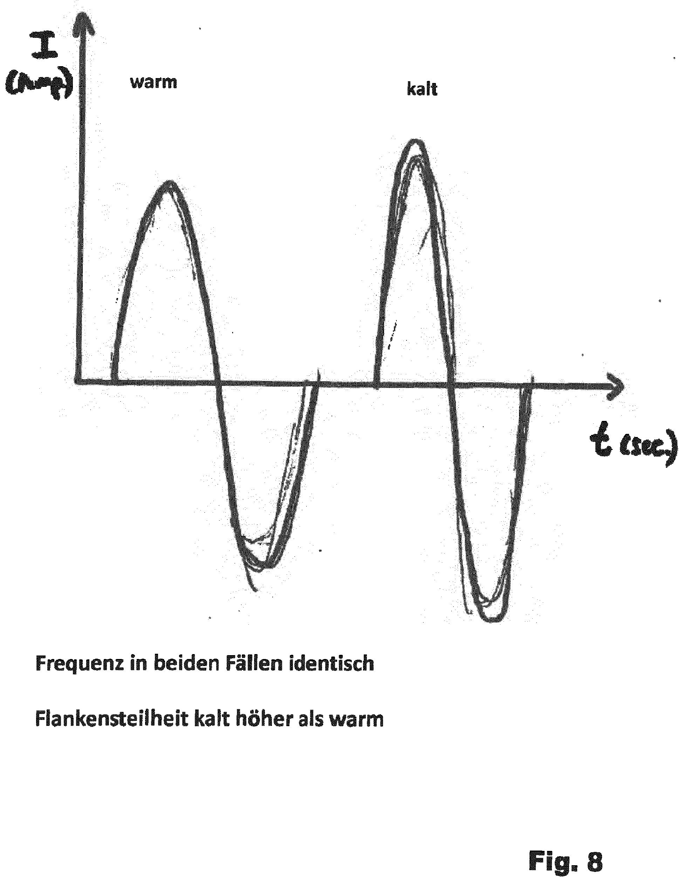

Vorzugsweise wird zum Zweck der Bestimmung der Induktivität die Flankensteilheit der Zeit/Stromkurve gemessen bzw. ausgewertet und zur Bestimmung der Induktivität herangezogen. Insoweit ist auf die Figur 8 zu verweisen. Die linke Hälfte der Figur 8 zeigt die Zeit-/Stromkurve, die das System aus Induktionsspule und Hülsenpartie bei Speisung durch einen Frequenzumrichter bei kalter Hülsenpartie zeigt. Die rechte Hälfte der Figur 8 zeigt die Zeit-/Stromkurve, die das System bei gleicher Speisung, aber bis auf Schrumpftemperatur erhitzter Hülsenpartie zeigt.

Eine besonders nützliche Option im Zusammenhang mit der erfindungsgemäßen Temperaturüberwachung ist die automatische Erkennung der Geometrie der jeweils in die Induktionsspule eingebrachten Hülsenpartie.

Hierzu dient nicht lediglich die Induktivität, sondern das Maß der Stromaufnahme durch die Induktionsspule im Verlaufe einer bestimmten Zeiteinheit. Das entscheidende Maß ist also nicht die Flankensteilheit der einzelnen Wellen, sondern die Zeit-/Stromkurve als ganze, für ein bestimmtes Zeitintervall.

Um dies zu ermitteln, wird mithilfe einer genau arbeitenden Leistungsquelle ein Strom (Prüfimpuls) mit bekannter Stromgröße, Stromform, Frequenz und Wirkungsdauer auf die Spule aufgegeben. Unter Stromgröße versteht man hier den Betrag der maximalen Amplitude des Stroms. Unter Stromform versteht man hier die Art der Wechselspannung, zum Beispiel eine Rechteckwechselspannung. Unter Einwirkungsdauer versteht man hier den Zeitraum, für den der Prüfimpuls aufgegeben wird.

Je nachdem, welchen Durchmesser bzw. welche Masse die betreffende Hülsenpartie hat, ergibt sich für sie ein unterschiedlicher Verlauf der Stromaufnahme innerhalb der betreffenden Zeiteinheit, also eine unterschiedliche Zeit-/Stromkurve. Das bedeutet, dass jede Hülsenpartie sozusagen einen magnetischen Fingerabdruck aufweist.

Aufgrund dessen kann auch hier wieder so vorgegangen werden, dass für sämtliche zur Bearbeitung auf dem Schrumpfgerät in Betracht zu ziehenden Hülsenpartien die Stromaufnahme innerhalb einer bestimmten Zeiteinheit, d.h. die Zeit-/Stromkurve, herstellerseitig gemessen und in der Schrumpfvorrichtung abgespeichert wird. Wenn nun der Kunde eine bestimmte Hülsenpartie eines bestimmten Werkzeughalters in die Induktionsspule eingebracht hat, wird ein entsprechender Prüfimpuls auf die Spule aufgegeben, noch vor Beginn des eigentlichen induktiven Heizvorgangs. Die dadurch erhaltene, gesamte Zeit-/Stromkurve wird mit den abgespeicherten Werten verglichen, um dadurch zu bestimmen, welche Hülsenpartie in die Induktionsspule eingebracht worden ist.

Dies erspart es dem Benutzer, zu Beginn der induktiven Beheizung angeben zu müssen, welchen Typ von Werkzeughalter mit welcher Hülsenpartie er aktuell mit dem Schrumpfgerät bearbeiten möchte. Dieses wird vielmehr automatisch erkannt. Dementsprechend kann das erfindungsgemäße Schrumpfgerät automatisch denjenigen, abgespeicherten Induktivitätswert aufrufen, der ein Maß dafür ist, ob der induktive Heizvorgang beendet werden muss. Gleichzeitig bietet sich die Möglichkeit, dass das erfindungsgemäße Schrumpfgerät auch automatisch den zu der betreffenden Hülsenpartie gehörenden Kaltwert der momentanen Induktivität aufruft und vor Beginn des induktiven Heizens feststellt, ob die in die Induktionsspule eingebrachte Hülsenpartie auch wirklich kalt ist.

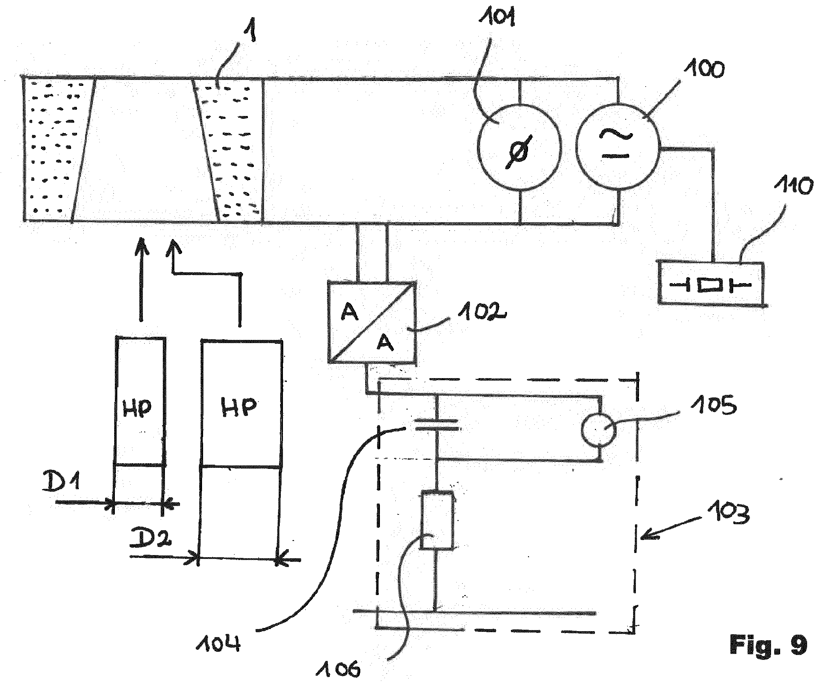

Wie die in diesem Kapitel beschriebenen Messungen gerätetechnisch umgesetzt werden können, das zeigt die Figur 9.

Gut zu erkennen ist hier die Induktionsspule 1. Die Induktionsspule 1 wird durch eine Leistungsquelle 100 gespeist, die einen genau definierten Prüfimpuls, wie oben geschildert, erzeugt. Um einen solchen Prüfimpuls mit der nötigen Genauigkeit herzustellen, kann eine Regelungseinheit 110 vorgesehen sein.

Zwischen den beiden Anschlussleitungen der Induktionsspule 1 liegt ein Messgerät 101, das die momentane Induktivität misst, und bei dem es sich um ein Messgerät an sich bekannter Bauart handeln kann. Dieses Messgerät 101 enthält vorzugsweise einen Komparator, der die aktuell gemessene, momentane Induktivität mit einem Grenzwert der Induktivität vergleicht, der ein Maß dafür ist, dass die Hülsenpartie weit genug erwärmt worden ist, um ein- oder ausschrumpfen zu können. Vorzugsweise ist der Komparator auch dazu in der Lage, zu vergleichen, ob der aktuell gemessene Kaltwert der momentanen Induktivität dem Kaltwert der Induktivität entspricht, den die aktuell in die Induktionsspule eingebrachte Hülsenpartie haben sollte.

Über einen Wandler 102 ist eine Hilfsschaltung 103 angeschlossen. Diese Hilfsschaltung dient der Bestimmung, welche Geometrie die aktuell in die Induktionsspule eingebrachte Hülsenpartie aufweist. Die Hilfsschaltung besitzt zu diesem Zweck mindestens einen Messkondensator 104 und mindestens ein Messgerät 105. Das Messgerät 105 ist dazu in der Lage, die momentane Spannung zu messen, die über dem Kondensator anliegt. Darüber hinaus umfasst die Hilfsschaltung im Regelfall einen Entladewiderstand 106, der typischerweise auf Masse gelegt ist und der dafür sorgt, dass der Messkondensator nach einem Prüfzyklus wieder entladen wird, während der Widerstand so groß gewählt ist, dass er den eigentlichen, relativ kurzen Prüfzyklus nicht nachteilig beeinflusst.

Je nachdem, wie die Hülsenpartie HP gestaltet ist, die in das Innere der Induktionsspule 1 eingebracht wird (siehe auch die beiden Varianten in Figur 9), ändert sich die Zeit-/Stromkurve, die die mit dem besagten Prüfimpuls beaufschlagte Induktionsspule zeigt. Das führt dazu, dass sich auch die Zeit-/Stromkurve, die an dem Kondensator 104 mittels des Messgeräts 105 gemessen wird, entsprechend ändert. Diese Zeit-/Stromkurve ist jeweils ein Fingerabdruck dafür, wie die Hülsenpartie beschaffen ist.

### Mobile Einheit

Eine Besonderheit der Erfindung ist, dass erstmals eine mobile Schrumpfeinheit möglich wird, die betriebsbereit i. d. R. weniger als 10 kg wiegt, daher und meist auch wegen ihres Designs als "Nur-Spulengehäuse mit Anschlussstecker" leicht getragen bzw. rangiert werden kann. Sie kommt aufgrund dessen "zur Werkzeugmaschine", um für den Einsatz vor Ort an der Werkzeugmaschine verwendet zu werden. Somit kann von dem bisherigen Konzept der stationären Schrumpfmaschine, zu der die Werkzeughalter angeliefert und von der die Werkzeughalter wieder abtransportiert werden müssen, um einen Werkzeugwechsel durchzuführen und weiterzuarbeiten, abgegangen werden .

Zunächst sei mit allgemeiner Geltung gesagt, dass zumindest die Komponenten "Induktionsspule, der erste Mantel und, soweit vorhanden, auch der zweite Mantel, die Leistungshalbleiterbauelemente und vorzugsweise auch die Kondensatoren" in einem gemeinsamen Gehäuse untergebracht sind. Idealerweise sind zusätzlich zu der Induktionsspule alle für den Betrieb der Induktionsspule erforderlichen Bauteile einschließlich der Steuerelektronik im gemeinsamen Gehäuse untergebracht.

Vorzugsweise verlässt das Gehäuse nur ein Speisekabel, das zur Spannungsversorgung des so gebildeten Schrumpfgeräts dient und zu diesem Zweck an seinem Ende idealerweise einen Stecker trägt, der den werkzeuglosen Anschluss an die Spannungsversorgung ermöglicht. Als Spannungsversorgung kommt hier vorzugsweise Netzspannung zu Einsatz, wie oben erwähnt. Das Ende des Speisekabels ist dann bevorzugt mit einem Schukostecker ausgerüstet, der den jeweiligen nationalen Anforderungen entspricht.

Wenn die Schrumpfvorrichtung von Hand gehalten werden soll, sind vorteilhaft Zentriermittel am Spulengehäuse angebracht, die die zentrische Positionierung der Spule zur Werkzeugachse erleichtern. Die Zentriermittel können beispielsweise als radial bewegliche Finger Fi ausgeführt sein, wie in Fig. 1 und 2 angedeutet.

Als besonders zweckmäßig hat es sich erwiesen, wenn die Vorrichtung mit mindestens einer Kupplung KU versehen ist, die ihr Ankuppeln an der Werkzeugmaschine erlaubt.

Dadurch kann die Vorrichtung einfach an der Werkzeugmaschine befestigt werden und nimmt dann eine arbeitssichere und vor Verschmutzung durch Kühlmittel und Spanpartikel geschützte Arbeitsposition ein.

Diese Kupplung KU entspricht vorzugsweise den gängigen Kupplungsprofilen, wie sie für die mit der erfindungsgemäßen Schrumpfvorrichtung zu bearbeitenden Werkzeughalter zum Einsatz kommen, z. B. einem HSK-Profil, wie von Fig. 2 gezeigt. Um die erfindungsgemäße Schrumpfvorrichtung in eine sichere Arbeitsposition zu bringen, ist dann nichts anderes erforderlich, als den einem Werkzeugwechsel zu unterziehenden Werkzeughalter von der Spindel der Werkzeugmaschine abzukuppeln und stattdessen die Schrumpfvorrichtung mit ihrem identischen Kupplungsprofil an die Spindel der Werkzeugmaschine anzukuppeln. Besonders günstig ist es, wenn die Kupplung der Schrumpfvorrichtung betriebsmäßig von der Schrumpfvorrichtung abgebaut werden kann, vorzugsweise werkzeuglos von Hand (insbes. Bajonettverschluss). Dadurch kann die Kupplung der Schrumpfvorrichtung leicht an den auf der jeweiligen Werkzeugmaschine zum Einsatz kommenden Kupplungstyp angepasst werden - Steilkegelkupplung, HSK usw.

Idealerweise sind die jeweiligen Kupplungen derart an die erfindungsgemäße Schrumpfvorrichtung angeschlossen, dass vom Kühlsystem der Werkzeugmaschine ausgegebene Kühlflüssigkeit/ausgegebener Kühlschmierstoff den mindestens einen Kühlkanal durchströmen kann, den die Schrumpfvorrichtung besitzt, vorzugsweise in ihrem zweiten Mantel - wie oben dargelegt.

Dabei kann zusätzlich eine - vorzugsweise eine (meist benachbart zur Induktionsspule) in die Schrumpfvorrichtung integrierte - Kühleinrichtung vorgesehen sein. In diese wird die Hülsenpartie des Werkzeughalters nach Beendigung des Schrumpfvorgangs hineingesteckt, um sie aktiv auf eine gefahrlose Berührungstemperatur herunter zu kühlen.

Zweckmäßigerweise wird diese Kühleinrichtung ebenfalls vom Kühlsystem der Werkzeugmaschine gespeist, im Regelfall ebenfalls über die besagte Kupplung. Aufgrund dessen wird auch Schutz für die Verwendung der von einer Werkzeugmaschine ausgegebenen Kühlflüssigkeit zu Kühlungszwecken (Kühlung des zweiten Mantels und/oder des Werkzeughalters) innerhalb eines Schrumpfgeräts beansprucht.

Alternativ kann die Schrumpfvorrichtung auch im Werkzeugmagazin der Werkzeugmaschine aufbewahrt werden. Der Werkzeugwechsler kann die Schrumpfvorrichtung dann entweder automatisch in die Maschinenspindel einsetzen oder sie an eine in der Spindel eingespannte Werkzeugaufnahme heranführen, um ein Werkzeug aus- oder einzuschrumpfen. Im zweiten Fall kann die Energiezuführung über ein Kabel erfolgen, das über einen Stecker direkt an der Schrumpfvorrichtung angesteckt wird. In beiden Fällen muss die Schrumpfvorrichtung nicht von Hand gehalten werden.

### Allgemeine Anmerkungen

Schutz wird auch für solche Schrumpfvorrichtungen oder Verfahren bzw. Verwendungen beansprucht, die jeweils nur, unabhängig von durch den derzeit aufgestellten Anspruchssatz beanspruchten Merkmalen, die Merkmale eines oder mehrerer der nachfolgend aufgeführten Absätze besitzen. Darüber hinaus wird auch Schutz für solche Schrumpfvorrichtungen oder Verfahren bzw. Verwendungen beansprucht, die Merkmale eines oder mehrerer der nachfolgend aufgelisteten Absätze aufweisen und zusätzlich andere Merkmale aus den bereits aufgestellten Ansprüchen oder der sonstigen Beschreibung einschließlich der Figuren.

Schrumpfvorrichtung, sich dadurch abhebend, dass die Platine eine Platinenringscheibe ist, deren Rotationssymmetrieachse bevorzugt koaxial, ansonsten parallel zu der Längsachse der Induktionsspule verläuft.

Schrumpfvorrichtung, sich dadurch abhebend, dass zwei Platinenringscheiben vorhanden sind, zwischen denen entlang des Umfangs der Induktionsspule die Glättungskondensatoren angeordnet sind.

Schrumpfvorrichtung, sich dadurch abhebend, dass der zweite Mantel einen oder mehrere Kühlkanäle bildet, die vorzugsweise in seinem Inneren verlaufen.

Schrumpfvorrichtung, sich dadurch abhebend, dass die Vorrichtung eine Kupplung zum Befestigen der Vorrichtung in der Aufnahme einer Werkzeugmaschinenspindel aufweist.

Schrumpfvorrichtung, sich dadurch abhebend, dass die Schrumpfvorrichtung so beschaffen ist, dass sie durch das Kühlsystem der Werkzeugmaschine mit Kühlmittel gespeist werden kann.

Schrumpfvorrichtung, sich dadurch abhebend, dass die Induktionsspule mit ihrem ersten und zweiten Mantel und mindestens die Leistungshalbleiterbauelemente und/oder die Glättungskondensatoren und idealerweise auch die Elektronik zum Ansteuern der Leistungshalbleiterbauelemente im Inneren eines Spulengehäuses oder Spulengehäuserings untergebracht sind, der oder das zumindest den Umfang der Induktionsspule umschließt und vorzugsweise auch mindestens eine, besser beide Stirnseiten der Induktionsspule übergreift.

Schrumpfvorrichtung, sich dadurch abhebend, dass das Spulengehäuse einen Stecker zum unmittelbaren Einspeisen von Netzwechselspannung aus dem öffentlichen Netz (110 V, 230 V oder 380 V) besitzt.

Schrumpfvorrichtung, sich dadurch abhebend, dass die Schrumpfvorrichtung batteriebetrieben ist.

Schrumpfvorrichtung, sich dadurch abhebend, dass ein Abschirmkragen vorgesehen ist, der aus einzelnen Segmenten besteht, die derart beweglich sind, dass sie sowohl mit einer Bewegungskomponente in radialer als auch mit einer Bewegungskomponente in axialer Richtung verfahren werden können.

Schrumpfvorrichtung, sich dadurch abhebend, dass an der dem Werkzeughalter zugewandten Stirnseite der Induktionsspule und/oder im Luftinnenraum der Induktionsspule Zentrierorgane vorgesehen sind, die jedenfalls bei auf Anschlag in die Induktionsspule eingeschobener Hülsenpartie deren koaxiale Positionierung in der Induktionsspule erzwingen.

Schrumpfvorrichtung, sich dadurch abhebend, dass die Schrumpfvorrichtung mindestens zwei Spulenwicklungsabschnitte besitzt, die in Richtung parallel zur Längsachse im Betrieb zum Zwecke der Einstellung auf die Geometrie einer zu erhitzenden Hülsenpartie aufeinander zu oder voneinander weg bewegt werden können.

Schrumpfsystem, bestehend aus einer Schrumpfvorrichtung nach einem der vorhergehenden Absätze, sich dadurch abhebend, dass zu dem Schrumpfsystem zusätzlich unterschiedliche, an der Schrumpfvorrichtung befestigbare Kupplungen gehören, mittels derer die Schrumpfvorrichtung an die Spindel einer Werkzeugmaschine festgesetzt werden kann.

### Bezugszeichenliste

- 1: Induktionsspule
- 2: Windungen (elektrische Wicklung) der Induktionsspule
- 3: erster Mantel
- 3a: stirnseitige magnetische Abdeckung, vorzugsweise in Gestalt eines Polschuhs
- 3aa: Polringscheibe
- 3ab: Abschirmkragen
- 3b: stirnseitige magnetische Abdeckung
- 4: Werkzeughalter
- 5: Abschirmung
- 6: nicht vergeben
- 7: Durchlass des Polschuhs
- 8: nicht vergeben
- 9: zweiter Mantel
- 10: Leistungshalbleiterbauelement
- 11: Aussparung
- 12: Anschluss eines Leistungshalbleiterbauelements
- 13: Rücksprung des zweiten Mantels
- 14a: Glättungskondensator
- 14b: Schwingkreiskondensator
- 15a: elektrische Platine
- 15b: elektrische Platine
- 16: Kühlkanal
- 17: Kühlkanalspeiseleitung
- 18-99: nicht vergeben
- 100: Leistungsquelle
- 101: Messgerät (Induktivitätsmesser)
- 102: Wandler
- 103: Hilfsschaltung
- 104: Messkondensator
- 105: Messgerät (Volt-Meter)
- 106: Entladewiderstand
- 107: nicht vergeben
- 108: nicht vergeben
- 109: nicht vergeben
- 110: Regelungseinheit

- G: Gleichrichter
- GNS: Gleichstrom -Niederspannung zur Speisung der Steuerungselektronik
- H: Halteschaft des Werkzeugs
- HP: Hülsenpartie des Werkzeughalters
- IC: integrierte Schaltung als Teil der Steuerungselektronik
- KU: Kupplung zum Ankuppeln der Schrumpfvorrichtung an eine Werkzeugmaschine
- L: Längsachse der Induktionsspule und des Werkzeughalters
- NST: Netzstrom
- SEK: Steuerelektronik
- SKS: Schwingkreis
- T: Trafo
- W: Werkzeug
- Fi: radial beweglicher Finger zur Zentrierung der Hülsenpartie bzw. des Werkzeughalters in der Induktionsspule
- AS: Anschlagabschnitt

## Patentansprüche

1. Verfahren zur Ermittlung eines magnetischen Fingerabdrucks einer in eine Induktionsspule (1) eines Schrumpfgerätes eingebrachten Hülsenpartie (HP) eines Werkzeughalters (4), **dadurch gekennzeichnet, dass** ein Prüfimpuls mit bekannter Stromgröße, Stromform, Frequenz und Wirkungsdauer auf die Induktionsspule (1) noch vor Beginn eines eigentlichen induktiven Heizvorgangs bei der in die Induktionsspule (1) eingebrachten Hülsenpartie (HP) aufgegeben wird, für diesen Prüfimpuls eine Zeit-/Stromkurve für die in die Induktionsspule (1) eingebrachten Hülsenpartie (HP) ermittelt wird und die für den Prüfimpuls ermittelte Zeit-/Stromkurve als Ganze als der magnetische Fingerabdruck für die in die Induktionsspule (1) eingebrachten Hülsenpartie (HP) hergenommen wird.

2. Verfahren nach mindestens dem voranstehenden Anspruch, **dadurch gekennzeichnet, dass** der Prüfimpuls mittels einer die Induktionsspule (1) speisenden Leistungsquelle (100) erzeugt wird.

3. Verfahren nach mindestens dem voranstehenden Anspruch, **dadurch gekennzeichnet, dass** zur Erzeugung des Prüfimpulses die Leistungsquelle (100) mittels einer Regelungseinheit (110) geregelt wird.

4. Verfahren nach mindestens einem der voranstehenden Ansprüche, **dadurch gekennzeichnet, dass** die Zeit-/Stromkurve unter Verwendung eines Wandlers (102) an der Induktionsspule (1) angeschlossenen Hilfsschaltung (103) gemessen wird.

5. Verfahren nach mindestens dem voranstehenden Anspruch, **dadurch gekennzeichnet, dass** die Hilfsschaltung (103) einen Kondensator (104) und ein Messgerät (105) aufweist, mit welchem Messgerät (105) die Zeit-/Stromkurve an dem Kondensator (104) gemessen wird.

6. Verfahren nach mindestens einem der zwei voranstehenden Ansprüche, **dadurch gekennzeichnet, dass** die Hilfsschaltung (103) einen Entladewiderstand (106) aufweist.

7. Verfahren nach mindestens dem voranstehenden Anspruch, **dadurch gekennzeichnet, dass** der Entladewiderstand (106) auf Masse gelegt ist.

8. Verfahren nach mindestens einem der voranstehenden Ansprüche, eingesetzt zur automatischen Erkennung einer in eine Induktionsspule (1) eines Schrumpfgerätes eingebrachten Hülsenpartie (HP) eines Werkzeughalters (4), insbesondere zur automatischen Erkennung einer Geometrie einer in eine Induktionsspule (1) eines Schrumpfgerätes eingebrachten Hülsenpartie (HP) eines Werkzeughalters (4), wobei die für die in die Induktionsspule (1) eingebrachten Hülsenpartie (HP) ermittelte Zeit-/Stromkurve als Ganze mit vorgegebenen Zeit-/Stromkurven von bekannten Hülsenpartien, insbesondere von bekannten Hülsenpartien mit bekannten Geometrien, verglichen wird, wodurch bestimmt wird, welche Hülsenpartie (HP) in die Induktionsspule (1) eingebracht ist, insbesondere deren Geometrie.

9. Schrumpfvorrichtung zur Ausführung des Verfahrens nach einem der Ansprüche 1 bis 8, mit einer Induktionsspule (1), einer die Induktionsspule (1) speisenden Leistungsquelle (100) und einer über einen Wandler (102) an der Induktionsspule (1) angeschlossenen Hilfsschaltung (103) mit einem Kondensator (104) und einem Messgerät (105), mit welchem Messgerät (105) die Zeit-/Stromkurve an dem Kondensator (104) messbar ist und mit welcher Leistungsquelle der Prüfimpuls auf die Induktionsspule (1) aufgebbar ist.

10. Schrumpfvorrichtung nach mindestens dem voranstehenden Anspruch, **dadurch gekennzeichnet, dass** die Hilfsschaltung (103) einen Entladewiderstand (106) aufweist, der auf Masse gelegt ist und der dafür sorgt, dass der Kondensator (104) nach einem Prüfzyklus wieder entladen wird, während der Entladewiderstand (106) so groß gewählt ist, dass er den eigentlichen, relativ kurzen Prüfzyklus nicht nachteilig beeinflusst.

## Claims

1. Method for determining a magnetic fingerprint of a sleeve part (HP) of a tool holder (4), said sleeve part being inserted into an induction coil (1) of a shrink-fit device, **characterized in that** a test pulse having a known current magnitude, current waveform, frequency and duration of action is applied to the induction coil (1) still before the beginning of an actual inductive heating process at the sleeve part (HP) inserted into the induction coil (1), for said test pulse a time/current curve is determined for the sleeve part (HP) inserted into the induction coil (1) and the time/current curve determined for the test pulse as a whole is taken as the magnetic fingerprint for the sleeve part (HP) inserted into the induction coil (1).

2. Method according to at least the preceding claim, **characterized in that** the test pulse is generated by means of a power source (100) that feeds the induction coil (1).

3. Method according to at least the preceding claim, **characterized in that** in order to generate the test pulse the power source (100) is controlled by means of a control unit (110).

4. Method according to at least one of the preceding claims, **characterized in that** the time/current curve is measured using a convertor (102) at an auxiliary circuit (103) connected to the induction coil (1).

5. Method according to at least the preceding claim, **characterized in that** the auxiliary circuit (103) comprises a capacitor (104) and a measuring device (105), which measuring device (105) is used to measure the time/current curve at the capacitor (104) .

6. Method according to at least one of the two preceding claims, **characterized in that** the auxiliary circuit (103) comprises a discharge resistor (106) .

7. Method according to at least the preceding claim, **characterized in that** the discharge resistor (106) is connected to earth.

8. Method according to at least one of the preceding claims, used for automatically identifying a sleeve part (HP) of a tool holder (4) that has been inserted into an induction coil (1) of a shrink-fit device, in particular for automatically identifying a geometry of a sleeve part (HP) of a tool holder (4) that has been inserted into an induction coil (1) of a shrink-fit device, wherein the time/current curve determined for the sleeve part (HP) inserted into the induction coil (1) as a whole is compared with predefined time/current curves of known sleeve parts, in particular of known sleeve parts having known geometries, which has the result of ascertaining what sleeve part (HP) has been inserted into the induction coil (1), in particular the geometry of said sleeve part.

9. Shrink-fit device for carrying out the method according to any of Claims 1 to 8, comprising an induction coil (1), a power source (100) that feeds the induction coil (1), and an auxiliary circuit (103) connected to the induction coil (1) via a convertor (102) and comprising a capacitor (104) and a measuring device (105), by means of which measuring device (105) it is possible to measure the time/current curve at the capacitor (104) and by means of which power source it is possible to apply the test pulse to the induction coil (1).

10. Shrink-fit device according to at least the preceding claim, **characterized in that** the auxiliary circuit (103) comprises a discharge resistor (106), which is connected to earth and which ensures that the capacitor (104) is discharged again after a test cycle, while the discharge resistor (106) is chosen with a value having a magnitude such that it does not disadvantageously influence the actual, relatively short test cycle.

## Revendications

1. Procédé de détermination d'une empreinte digitale magnétique d'une partie de douille (HP) d'un porte-outil (4) introduite dans une bobine d'induction (1) d'un appareil de frettage, **caractérisé en ce qu'**une impulsion de contrôle ayant une intensité de courant, une forme de courant, une fréquence et une durée d'action connues est déchargée sur la bobine d'induction (1) encore avant le début d'une opération de chauffage inductif proprement avec la partie de douille (HP) introduite dans la bobine d'induction (1), une courbe temps/courant est déterminée pour cette impulsion de contrôle pour la partie de douille (HP) introduite dans la bobine d'induction (1) et la courbe temps/courant déterminée pour l'impulsion de contrôle est prise dans son ensemble comme l'empreinte digitale magnétique pour la partie de douille (HP) introduite dans la bobine d'induction (1).

2. Procédé selon au moins la revendication précédente, **caractérisé en ce que** l'impulsion de contrôle est générée au moyen d'une source de puissance (100) qui alimente la bobine d'induction (1) .

3. Procédé selon au moins la revendication précédente, **caractérisé en ce que** pour générer l'impulsion de contrôle, la source de puissance (100) est régulée au moyen d'une unité de régulation (110).

4. Procédé selon au moins l'une des revendications précédentes, **caractérisé en ce que** la courbe temps / courant est mesurée à l'aide d'un convertisseur (102) sur un circuit auxiliaire (103) connecté à la bobine d'induction (1).

5. Procédé selon au moins la revendication précédente, **caractérisé en ce que** le circuit auxiliaire (103) possède un condensateur (104) et un appareil de mesure (105), appareil de mesure (105) avec lequel la courbe temps/courant est mesurée au niveau du condensateur (104).

6. Procédé selon au moins l'une des deux revendications précédentes, **caractérisé en ce que** le circuit auxiliaire (103) possède une résistance de décharge (106).

7. Procédé selon au moins la revendication précédente, **caractérisé en ce que** la résistance de décharge (106) est mise à la masse.

8. Procédé selon au moins l'une des revendications précédentes, mis en œuvre pour la reconnaissance automatique d'une partie de douille (HP) d'un porte-outil (4) introduite dans une bobine d'induction (1) d'un appareil de frettage, notamment pour la reconnaissance automatique d'une géométrie d'une partie de douille (HP) d'un porte-outil (4) introduite dans une bobine d'induction (1) d'un appareil de frettage, la courbe temps/courant déterminée pour la partie de douille (HP) introduite dans la bobine d'induction (1) étant comparée dans son ensemble avec des courbes temps/courant prédéfinies de parties de douille connues, notamment de parties de douille connues ayant des géométries connues, moyennant quoi il est déterminé quelle partie de douille (HP) est introduite dans la bobine d'induction (1), notamment sa géométrie.

9. Dispositif de frettage destiné à mettre en œuvre le procédé selon l'une des revendications 1 à 8, comprenant une bobine d'induction (1), une source de puissance (100) qui alimente la bobine d'induction (1) et un circuit auxiliaire (103), comprenant un condensateur (104) et un appareil de mesure (105), raccordé à la bobine d'induction (1) par le biais d'un convertisseur (102), appareil de mesure (105) avec lequel la courbe temps/courant peut être mesurée au niveau du condensateur (104) et source de puissance avec lequel l'impulsion de contrôle peut être déchargée sur la bobine d'impulsion (1) .

10. Dispositif de frettage selon au moins la revendication précédente, **caractérisé en ce que** le circuit auxiliaire (103) possède une résistance de décharge (106) qui est mise à la masse et qui contribue à ce que le condensateur (104) soit de nouveau déchargé après un cycle de contrôle, alors que la résistance de décharge (106) est choisie suffisamment grande pour qu'elle n'influence pas défavorablement le cycle de contrôle relativement court proprement dit.
